# EUROPEAN PATENT SPECIFICATION

(11) **EP 4 418 612 B1**
(45) Date of publication and mention of the grant of the patent: **10.06.2026**
(21) Application number: 24155907.9
(22) Date of filing: 06.02.2024
(51) Int. Cl.: H04L 9/40, H04L 9/32, G06F 21/33, G06F 21/62

(54) **INFORMATION PROCESSING APPARATUS AND INFORMATION PROCESSING METHOD**
INFORMATIONSVERARBEITUNGSVORRICHTUNG UND INFORMATIONSVERARBEITUNGSVERFAHREN
APPAREIL ET PROCÉDÉ DE TRAITEMENT D'INFORMATIONS

(30) Priority: 15.02.2023 JP 2023021766
(43) Date of publication of application: 21.08.2024
(73) Proprietor: TOYOTA JIDOSHA KABUSHIKI KAISHA, Toyota-shi, Aichi-ken, 471-8571 (JP)
(72) Inventor: NITTA, Iwao, Toyota-Shi, Aichi-Ken 471-8571 (JP); FUJIWARA, Teruyoshi, Toyota-Shi, Aichi-Ken 471-8571 (JP); SUZUKI, Ryota, Nagoya, Aichi 451-6015 (JP)
(74) Representative: Cabinet Beau de Loménie

(56) References cited:
- WO-A1-2008/065344
- KR-A- 20160 085 143
- US-A1- 2020 028 699
- US-A1- 2021 256 587

## Description

### BACKGROUND OF THE INVENTION

### 1. Field of the Invention

The disclosure relates to an information processing apparatus and an information processing method.

### 2. Description of Related Art

There has been suggested a system with which information on dealing products is shared between a vendor company and a customer company (see, for example, Japanese Unexamined Patent Application Publication No. 2004-171146 (JP 2004-171146 A)). With this system, information can be shared on a common platform between companies in a supply chain or the like. Besides, KR 2016 0085143 discloses a method for providing anonymous service and a method for managing user information and a system therefor.

### SUMMARY OF THE INVENTION

The disclosure provides a technology effective to ensure authenticity of a company that desires to join a platform anonymously.

A first aspect of the disclosure provides an information processing apparatus as defined in claim 1.

A second aspect of the disclosure provides an information processing method as defined in claim 5.

Another aspect of the disclosure provides a program for causing a computer to execute the information processing method or a non-transitory storage medium storing the program.

In the above aspects, the electronic signature of the second company is generated by encrypting predetermined information with a secret key corresponding to the public key of the second company.

In the above configuration, the invitation data sent is configured to further include the predetermined information.

In the above configuration, the predetermined information is generated based on dealing data on dealing between the first company and the second company.

In the above configuration, selecting one or more pieces of dealing data from among multiple pieces of dealing data on dealing between the first company and the second company; and generating the predetermined information from the one or more pieces of dealing data selected, may be further executed in response to acceptance of the application.

In the above configuration, the multiple pieces of dealing data on dealing between the first company and the second company may be held in the platform; and the selecting the one or more pieces of dealing data may include accepting designation of the multiple pieces of dealing data from the account of the first company, and selecting the one or more pieces of dealing data from among the multiple pieces of dealing data designated.

In the above configuration, the predetermined information may be generated by adding a predetermined value to the dealing data and hashing or encrypting the dealing data to which the predetermined value is added.

In a non-claimed alternative, the predetermined information may be a random number generated.

According to the aspects of the disclosure, it is possible to provide a technology effective to ensure authenticity of a company that desires to join a platform anonymously.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the outline of an example of a process executed in a system according to an embodiment;
FIG. 2 is a diagram that illustrates an example of a supply chain according to the embodiment;
FIG. 3 is a diagram that illustrates an example of a relationship among products supplied by the supply chain;
FIG. 4 is a diagram that shows the outline of a process executed between a server apparatus and company terminals;
FIG. 5 is a hardware configuration diagram of the server apparatus according to the embodiment;
FIG. 6 is a hardware configuration diagram of each company terminal according to the embodiment;
FIG. 7 is a software configuration diagram of the server apparatus according to the embodiment;
FIG. 8 is a software configuration diagram of each company terminal according to the embodiment;
FIG. 9 is an example of product information generated by a product information generating unit;
FIG. 10 is an example of dealing data generated by the product information generating unit;
FIG. 11 is an example of a user interface output by an authority setting unit;
FIG. 12 is an example of permission information generated by the authority setting unit based on information input;
FIG. 13 is an example of a user interface containing a list of products that are candidates to be associated;
FIG. 14 is a diagram that shows an example of the flow of a process executed by the server apparatus;
FIG. 15 is a sequence diagram that illustrates a process executed by the server apparatus and the company terminal in first to third phases;
FIG. 16 is a sequence diagram that illustrates a process executed by the server apparatus and the company terminal in a fourth phase;
FIG. 17 is a sequence diagram that illustrates a process executed by the system at the time of issuing an account to an anonymous company;
FIG. 18 is an example of a user interface output by a management unit; and
FIG. 19 is a flowchart that shows the flow of a process executed by the server apparatus at the time of issuing an account to an anonymous company.

### DETAILED DESCRIPTION OF EMBODIMENTS

Carbon footprint (Carbon Footprint of Products (CFP)) is a mechanism for converting the amount of emission of greenhouse effect gas emitted through the entire life cycle from raw material procurement of products to disposal and recycling to CO₂ emission amount and indicating the CO₂ emission amount on the products. To implement CFP, traceability in which suppliers involved from raw material procurement of products to disposal and recycling are recorded and a history is placed in a traceable state is important.

To ensure traceability of CFP or the like, it is desired to collect the information not only between adjacent companies but also over the entire supply chain. Incidentally, among companies in a supply chain, there can be companies that desire to anonymously join a platform. However, with the existing system, there is an inconvenience that it is difficult to ensure the authenticity of a company that anonymously joins a platform. This inconvenience is not limited to a scene to collect carbon footprint. The inconvenience can arise in, for example, every scene to collect selected information on products, such as other traceability-related information (for example, a raw material recycling rate, due diligence information, or the like) and information on the other products (for example, constituent elements, identification information, and the like).

An information processing apparatus that is one of the aspects of the disclosure includes a control unit. The control unit is configured to execute: accepting an application for approval for a second company to join a platform from an account of a first company that has joined the platform; sending invitation data to the second company in response to the application, the invitation data including a request to submit an address and an electronic certificate issued by a certificate authority; accepting access from a terminal of the second company to the address included in the invitation data; acquiring the electronic certificate and an electronic signature of the second company from the terminal of the second company in response to the access; verifying validity of the electronic certificate acquired, by using a public key of the certificate authority; verifying validity of the electronic signature acquired, by using a public key of the second company, the public key being included in the electronic certificate; and approving joining of the second company in the platform in response to successful verification of the validity of the electronic certificate and successful verification of the validity of the electronic signature.

The information processing apparatus according to the disclosure may be a server that manages a platform or may be a server independent of a platform. The information processing apparatus may be a computer configured to be capable of executing a web server for performing interaction with a terminal of a company that has already joined the platform. In this case, the terminal of the first company can submit an application for approval for the second company to join the platform by accessing the web server through a browser and logging onto the web server with the account of the first company. The information processing apparatus may implement a function equivalent to the web server by executing a service to perform interaction with a dedicated application program installed in the terminal of the first company and a predetermined protocol. In this case, the terminal of the first company may log onto the information processing apparatus by running a dedicated application program by using the account of the first company.

In the information processing apparatus that has accepted the application from the account of the first company, the control unit sends invitation data to the second company. The invitation data may be sent to the second company via the first company or may be directly sent to the second company. The second company having received the invitation data is allowed to access an address included in the invitation data through the terminal of the second company. The address included in the invitation data may be, for example, a uniform resource locator (URL) of a web site provided from the information processing apparatus through execution of the web server. In an example, the URL may be a one-time URL. The control unit acquires an electronic certificate and an electronic signature of the second company by performing interaction with the terminal of the second company having accessed the address included in the invitation data. The control unit verifies the validity of the electronic certificate acquired, by using the public key of the certificate authority. When verification of the validity of the electronic certificate is successful, validity of identity verification of the second company by the certificate authority is ensured. The control unit verifies the validity of the electronic signature of the second company by using the public key included in the electronic certificate acquired. When verification of the validity of the electronic signature of the second company is successful, consistency between the source accessing the address included in the invitation data and the second company subjected to identity verification by the certificate authority is ensured. Thus, when verification of the validity of the electronic certificate and the validity of the electronic signature is successful, the control unit is allowed to determine that the authenticity of the second company is ensured. The control unit of the information processing apparatus is allowed to approve joining of the second company in the platform on condition that the authenticity of the second company is ensured.

Therefore, with the information processing apparatus according to the aspect of the disclosure, even when the second company anonymously joins the platform, the authenticity of the second company is ensured.

Here, the electronic signature of the second company may be generated by encrypting predetermined information with a secret key corresponding a public key of the second company (a public key included in the electronic certificate of the second company). The predetermined information may be selected voluntarily. In an example, the predetermined information may be information designated by the control unit of the information processing apparatus. In this case, the predetermined information may be included in the invitation data sent by the control unit. Thus, the control unit is capable of verifying consistency between a destination to which the invitation data is sent and a source accessing the address included in the invitation data by verifying the validity of the electronic signature.

The predetermined information may be generated based on dealing data on dealing between the first company and the second company. In an example, the control unit of the information processing apparatus may be configured to further execute, in response to acceptance of the application for approval for the second company to join the platform, select one or more pieces of dealing data from among multiple pieces of dealing data on dealing between the first company and the second company, and generate predetermined information from the one or more pieces of dealing data selected. When dealing data on dealing between the first company and the second company is used as the predetermined information, presence of dealing between the first company and the second company is ensured. When the control unit selects one or more pieces of dealing data used to generate the predetermined information, it is possible to reduce a situation that dealing data used to generate the predetermined information is identified by a third party.

The multiple pieces of dealing data on dealing between the first company and the second company may be held in the platform. In this case, the selecting one or more pieces of dealing data may include accepting designation of multiple pieces of dealing data from the account of the first company, and selecting one or more pieces of dealing data from among the multiple pieces of dealing data designated.

The predetermined information may be generated by adding a predetermined value to the dealing data and hashing or encrypting the dealing data to which the predetermined value is added. Thus, it is possible to further reliably reduce a situation that dealing data used to generate the predetermined information is identified by a third party.

The predetermined information may be a random number generated by the control unit. Thus, it is possible to verify consistency between a destination to which the invitation data is sent and a source accessing the address included in the invitation data.

Hereinafter, embodiments of the disclosure will be described with reference to the accompanying drawings. The configurations of the following embodiments are illustrative, and the disclosure is not limited to the configurations of the embodiments. The following embodiments may be combined as long as possible.

### Embodiment

A system according to the present embodiment is a system that provides information on products supplied by a supply chain including a plurality of companies. Information on products is typically information on traceability. Provision of information on products supplied by the supply chain is implemented by a plurality of companies that belong to the supply chain, using a common platform. Companies that belong to a supply chain can be changed as needed according to the attribute of a product or the like.

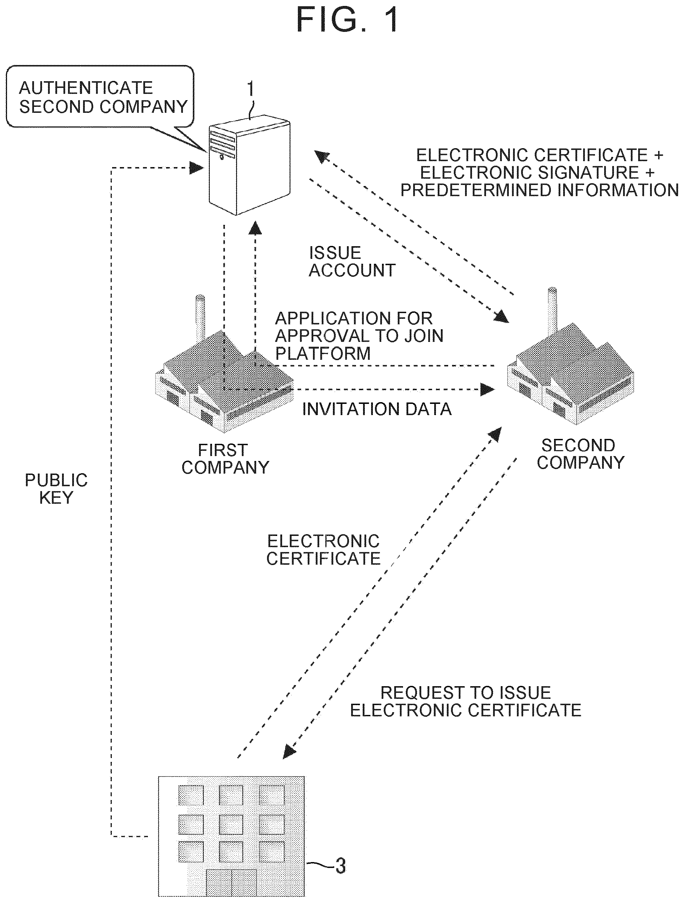

FIG. 1 is a diagram that shows the outline of an example of a process executed in the system according to the present embodiment. In the example shown in FIG. 1, it is assumed that a second company desires to anonymously join a platform. A first company is a company that has joined the platform and that has dealt with the second company. A server apparatus 1 is configured to manage information indicating a supply relationship of products among a plurality of companies included in the supply chain. The server apparatus 1 is configured to accept an application for approval for the second company to join the platform and verify the authenticity of the second company.

In the system according to the present embodiment, the second company that desires to anonymously join the platform submits an application for approval to join the platform to the server apparatus 1. The second company has not joined the platform, so the second company has no account for logging onto the server apparatus 1. Therefore, the application is submitted via a company (first company) that has already joined the platform and that has dealt with the second company. In other words, the second company makes a request of the first company to submit an application for approval to join the platform. The first company having received the request logs onto the server apparatus 1 by using the account of the first company and submits the application to the server apparatus 1. The server apparatus 1 having accepted the application sends invitation data to the second company. In an example, the invitation data includes an address, an electronic certificate issued by a certificate authority 3, and predetermined information. The address included in the invitation data is a URL of a web site, provided through execution of the process of the web server by the server apparatus 1. The URL may be a general URL or may be a one-time URL. The predetermined information included in the invitation data will be described later. Such invitation data may be sent to the second company via the first company. When contact information (for example, a mail address or the like) of the second company is included in the application, the server apparatus 1 may send invitation data to the second company without intervening the first company.

The second company having received the invitation data generates a secret key and a public key of the second company. Subsequently, the second company makes an issuance request of the certificate authority 3 to issue an electronic certificate. The issuance request includes the public key generated by the second company. The secret key and public key of the second company may be generated by the certificate authority 3. In this case, the issuance request just needs to include a request to generate the secret key and public key of the second company. The certificate authority 3 is, for example, a trusted third party that executes information processing on authentication, such as issuance of electronic certificates for companies.

The certificate authority 3 having received the issuance request performs identity verification of the second company based on, for example, certificate information, such as a register and a certificate of tax payment. In an example, when the identity verification of the second company is successful, the certificate authority 3 creates owner identification information of the second company. The certificate authority 3 calculates a hash value of plain text including the owner identification information created and the public key of the second company. Generation of the owner identification information and the configuration of the plain text may be selectively changed. The certificate authority 3 generates an electronic signature of the certificate authority 3 by encrypting the hash value calculated, with the secret key of the certificate authority 3. The certificate authority 3 generates an electronic certificate including information for reconfiguring the plain text (in the above one example, the owner identification information of the second company), the public key of the second company, and the electronic signature of the certificate authority 3. The certificate authority 3 issues the electronic certificate generated to the second company. The certificate authority 3 registers the electronic certificate generated to a repository. When the issuance request from the second company includes a request of the second company to generate a secret key and a public key, the certificate authority 3 generates the secret key and public key of the second company at the time of generating an electronic certificate.

Timing to generate an electronic certificate is not limited to the example described above and may be selectively changed. In another example, an electronic certificate may be generated at selected timing before the second company receives the invitation data. Similarly, timing to generate the secret key and public key of the second company is also not limited to the above-described example and may be selectively changed. In another example, the secret key and public key of the second company may be generated at selected timing before the second company receives the invitation data.

The second company having received the electronic certificate issued from the certificate authority 3 accesses the address included in the invitation data through the terminal of the second company. In response to this, the server apparatus 1 acquires the electronic certificate issued from the certificate authority 3, the electronic signature of the second company, and the predetermined information by performing interaction with the terminal of the second company. The electronic signature of the second company according to the present embodiment is an electronic signature different from the electronic signature of the certificate authority 3 and is generated by encrypting the predetermined information with the secret key of the second company. In an example, the electronic signature of the second company may be generated by encrypting the hash value of the plain text, including the predetermined information, with the secret key of the second company. Timing to generate the electronic signature of the second company does not need to be limited to such an example and may be selectively changed. In another example, the electronic signature of the second company may be generated before accessing the address included in the invitation data.

The server apparatus 1 having acquired the electronic certificate, the electronic signature of the second company, and the predetermined information acquires the public key of the certificate authority 3. The server apparatus 1 verifies the authenticity of the second company by using the public key acquired from the certificate authority 3. In the present embodiment, verification of the authenticity of the second company includes verification of the validity of the electronic certificate and verification of the validity of the electronic signature of the second company.

In verification of the validity of the electronic certificate, initially, the server apparatus 1 decodes the electronic signature of the certificate authority 3, included in the electronic certificate, by using the public key of the certificate authority 3. The server apparatus 1 calculates a hash value of the plain text of the owner identification information and the public key of the second company, included in the electronic certificate. Subsequently, the server apparatus 1 compares the information obtained by decoding the electronic signature of the certificate authority 3 and the hash value calculated. When comparison between the information decoded from the electronic signature of the certificate authority 3 and the hash value calculated is successful, the server apparatus 1 determines, by consulting the repository of the certificate authority 3, whether the electronic certificate expires. When the electronic certificate has not become invalid, the server apparatus 1 determines that verification of the validity of the electronic certificate is successful.

In verification of the validity of the electronic signature of the second company, initially, the server apparatus 1 decodes the electronic signature of the second company by using the public key of the second company, included in the electronic certificate. Subsequently, the server apparatus 1 compares the information obtained by decoding the electronic signature of the second company, with the predetermined information. In an example, the server apparatus 1 may hash the plain text including the predetermined information and compare the hash value obtained, with the information decoded. When comparison between the information obtained by decoding the electronic signature of the second company and the predetermined information is successful, it is proved that the electronic signature is generated by using the secret key (the secret key corresponding to the public key included in the electronic certificate) of the second company and the predetermined information included in the invitation data. Thus, it is regarded that a source accessing the address included in the invitation data holds the secret key of the second company and a recipient of the invitation data matches the source accessing the address. In other words, it is found that the source accessing the address included in the invitation data matches the second company subjected to identity verification by the certificate authority. When comparison between the information obtained by decoding the electronic signature and the predetermined information is successful, the server apparatus 1 determines that the electronic signature of the second company is valid. A sequence to verify the validity of the electronic certificate and the electronic signature of the second company may be selected. In an example, after the validity of the electronic certificate is verified, the validity of the electronic certificate of the second company may be verified. In another example, after the validity of the electronic signature of the second company is verified, the validity of the electronic certificate may be verified. In further another example, the validity of the electronic certificate and the validity of the electronic signature of the second company may be verified at least partially in parallel.

When verification of the validity of the electronic certificate and electronic signature provided from the second company is successful, the server apparatus 1 approves joining of the second company in the platform. In other words, the server apparatus 1 generates the account of the second company and issues the account generated to the second company.

Because the above-described process is executed in the system, when the second company desires to anonymously join the platform, the authenticity of the second company is ensured.

### Structure of Supply Chain

The structure of the supply chain to which the system according to the present embodiment is applied will be described. In an example, at least some companies (intermediate suppliers) included in the supply chain can receive parts from one or more upstream companies, produce their own company's products by using the parts received, and supply their own company's products produced to companies (downstream companies) in the next process. A most upstream company can directly produce its own company's products and supply its own company's products produced to a company in the next process. Some companies of the supply chain can directly supply (that is, be involved in distribution of) products received from another company to a different company. A plurality of companies repeats this flow, and final products are obtained in the last process.

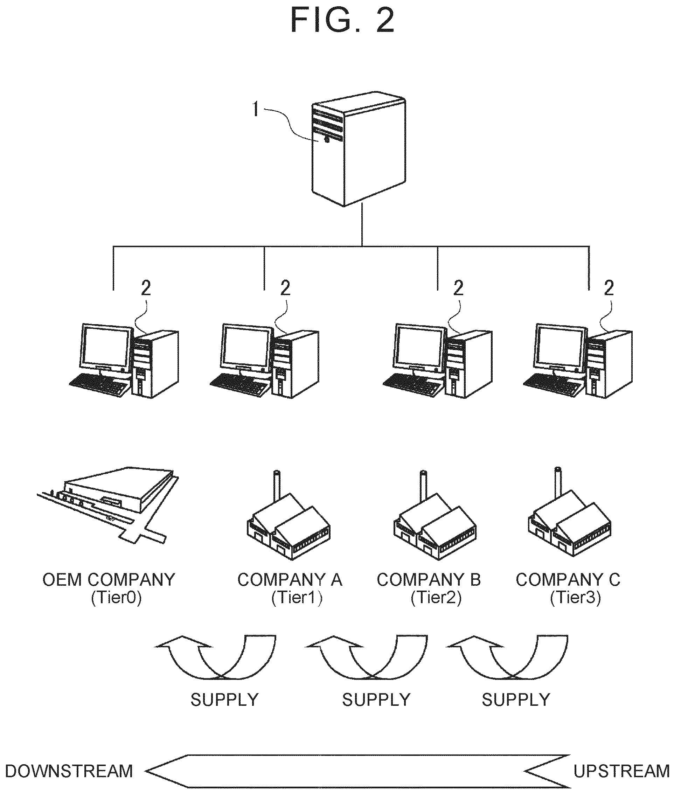

FIG. 2 is a diagram that illustrates an example of the supply chain according to the present embodiment. In the example of FIG. 2, a scene where products on automobiles are obtained is assumed. Specifically, the supply chain shown in FIG. 2 is made up of an OEM company and a plurality of companies that are suppliers. In the example of FIG. 2, it is assumed that the supply chain manufactures, for example, automobiles themselves, and products relevant to automobiles, such as batteries. The OEM company is a company that provides end products assembled. The companies (Company A, Company B, and Company C) that are suppliers supply parts, materials, assemblies, and the like for manufacturing end products. The companies that are suppliers each produce one or more products and supply the products to companies at a level lower by one. A plurality of companies repeats this flow, and final products are obtained in the last process (that is, the OEM company).

In the present embodiment, a side that supplies products at levels of the supply chain is referred to as an upstream side, and a side that purchases the products and produces new products is referred to as a downstream side. In the specification, a company positioned at the upstream side is referred to as an upstream company, and a company positioned at the downstream side is referred to as a downstream company. Products produced by an upstream company are referred to as upstream products, and products produced by a downstream company are referred to as downstream products. Downstream products include upstream products.

In the present embodiment, levels in the supply chain are referred to as Tiers. Tier0 is the lowest level that provides final products assembled (that corresponds to the OEM company), and, as the level advances in order of Tier1, Tier2, and Tier3, the level shifts toward the upstream side. Depending on a level focused, a downstream company may be changed to an upstream company. For example, Company B in Tier2 is a downstream company in relation to Tier3 but is an upstream company in relation to Tier1. In this way, the definition of upstream company and downstream company can change level by level.

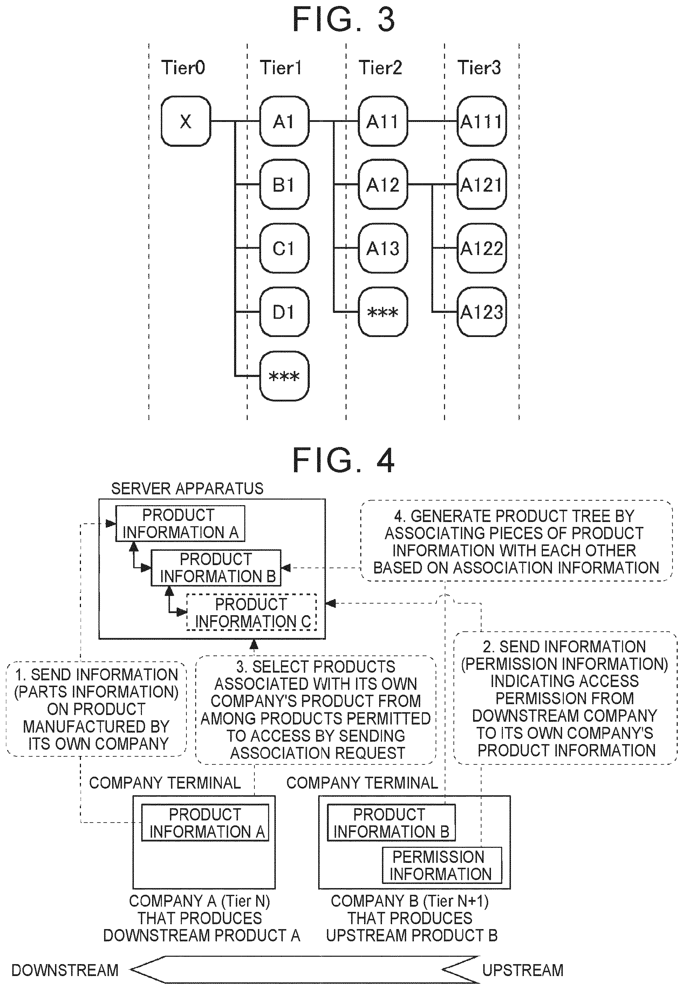

FIG. 3 is a diagram that illustrates an example of a relationship among products supplied by a supply chain. Here, a supply relationship of a plurality of products that make up an end product X is represented by a tree diagram. In this example, the end product X is produced by assembling products A1, B1, C1, D1, ... The product A1 is produced by assembling products A11, A12, A13, ... In this way, a relationship among a plurality of products that make up an end product can be represented by a tree diagram with individual products as nodes. Hereinafter. a tree diagram on a specific end product is referred to as a product tree. In an example, the end product X is a battery to be mounted on a battery electric vehicle (BEV). In another example, the end product X may be an automobile or a product relevant to an automobile, such as an assembly of an automobile.

The server apparatus 1 according to the present embodiment collects information on products produced by companies (hereinafter, product information) and information for associating pieces of product information from terminals corresponding to companies (company terminals 2) and generates a product tree based on these pieces of information. Product information includes information on traceability (for example, information on the amount of emission of greenhouse effect gas, or the like; hereinafter, referred to as "traceability-related information"). It is possible to trace carbon footprint or the like by tracking a product tree. Traceability-related information may include every information that can be a target to ensure traceability.

As shown in FIG. 2, the information processing system according to an example of the present embodiment includes the server apparatus 1 and the company terminals 2.

The company terminals 2 are terminals respectively corresponding to the companies that make up the supply chain. The number of terminals corresponding to each company may be selected. Terminals corresponding to a target company may include a terminal of a company that performs an operation on the target company (for example, a substitute company).

The server apparatus 1 collects information for generating a product tree from each of the company terminals 2 and generates a product tree based on these pieces of information collected. Furthermore, the server apparatus 1 is capable of executing a process on traceability (typically, a process of calculating the amount of emission of carbon dioxide, or the like) based on the product tree generated. The server apparatus 1 is also capable of sending the execution result of the process to the company terminals 2.

Next, the outline of a process in which the server apparatus 1 generates a product tree will be described with reference to FIG. 4. FIG. 4 is a diagram that shows the outline of a process executed between the server apparatus 1 and the company terminals 2. In the example of FIG. 4, it is assumed that, at a selected level, there are Company A that is a downstream company and Company B that is an upstream company. It is assumed that Company B produces a product B and supplies the product B to Company A and Company A produces a product A by using the product B. In other words, in the example of FIG. 4, the product B is a child node of the product A in the product tree.

To generate a product tree, the company terminals 2 respectively corresponding to the companies each send information on products produced by itself to the server apparatus 1. In this example, the company terminal 2 corresponding to Company A sends product information on the product A (referred to as product information A) to the server apparatus 1. Similarly, the company terminal 2 corresponding to Company B sends product information on the product B (referred to as product information B) to the server apparatus 1. The product information of each company is stored in the server apparatus 1.

An operation to associate the pieces of product information stored in the server apparatus 1 is performed by the company terminal 2. In an example, a person in charge of the downstream company logs onto the server apparatus 1 from the company terminal 2 with an account of the downstream company and selects an upstream product with which the downstream product that is its own company's product is associated. In this way, association of pieces of product information with each other is performed from the downstream product to the upstream product. The server apparatus 1 associates the pieces of product information based on the selection.

Incidentally, when a product with which a product is associated is selected, if products in the supply chain and pieces of information on the products all are presented as choices, confidentiality of both information on companies that make up the supply chain and information on products produced by the companies is impaired. Furthermore, it may not be reasonable to disclose the whole of the product tree to one supplier.

For this reason, the server apparatus 1 according to the present embodiment gives in advance authority to access product information of an upstream product to a downstream company in response to a request from an upstream company. The server apparatus 1 permits access from the downstream company within the range of authority given.

In the example of FIG. 4, the company terminal 2 corresponding to Company B that is an upstream company sends the server apparatus 1 a request (information) to provide instructions to "give Company A authority to access the product information B". When the server apparatus 1 receives a request regarding association from the company terminal 2 corresponding to Company A, the server apparatus 1 provides only a list of pieces of product information of which access authority is given to Company A and prompts for selecting as a target to be associated. When there is a request to access the product tree from the company terminal 2 corresponding to Company A, the server apparatus 1 provides the company terminal 2 with a product tree in which information other than information to which access authority is given to Company A is concealed. Thus, it is possible to conceal information on irrelevant companies and products.

### Hardware Configuration

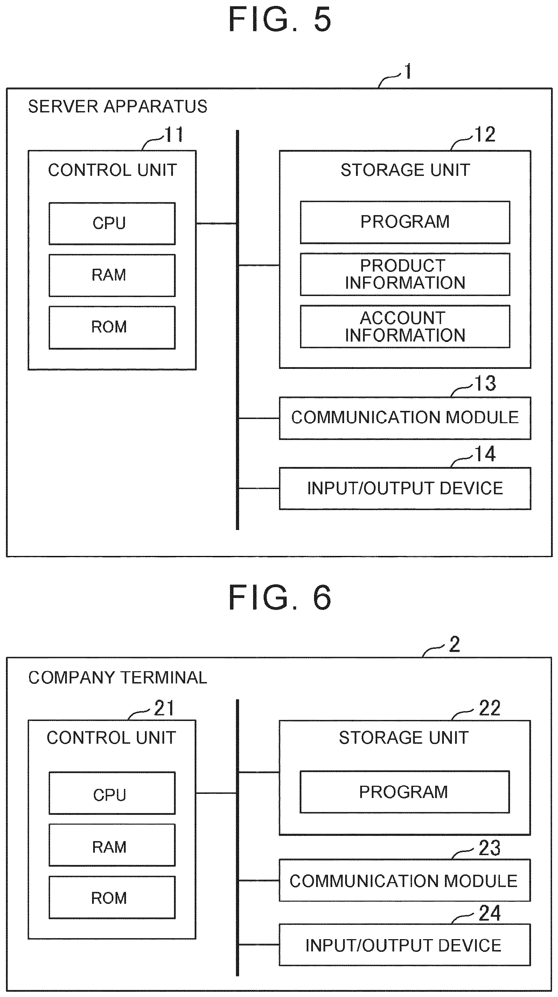

Next, the hardware configuration of each of the devices that make up the system will be described. FIG. 5 is a diagram that schematically shows an example of the hardware configuration of the server apparatus 1 according to the present embodiment. The server apparatus 1 is configured as a computer including a control unit 11, a storage unit 12, a communication module 13, and an input/output device 14.

The server apparatus 1 is an example of the information processing apparatus according to the aspect of the disclosure. The server apparatus 1 may be configured as a computer including a processor (a CPU, a GPU, or the like), a main storage device (a RAM, a ROM, or the like), and an auxiliary storage device (an EPROM, a hard disk drive, a removable medium, or the like). An operating system (OS), various programs, various tables, and the like are stored in the auxiliary storage device. Various functions (software modules) that match predetermined purposes as will be described later can be implemented by running the programs stored in the auxiliary storage device. One, some, or all of the modules may be implemented as hardware modules by a hardware circuit, such as an application specific integrated circuit (ASIC) and a field programmable gate array (FPGA).

The control unit 11 is an arithmetic unit that implements various functions of the server apparatus 1 by running predetermined programs. The control unit 11 can be implemented by, for example, a hardware processor, such as a CPU. The control unit 11 may be configured to include a RAM, a read only memory (ROM), a cache memory, or the like.

The storage unit 12 is a device that stores information and is a storage medium, such as a RAM, a magnetic disk, and a flash memory. Programs to be run on the control unit 11, data used by the programs, and the like are stored in the storage unit 12. A database is constructed in the storage unit 12. Information collected from the company terminals 2, account information on companies, and other information are stored in the database. The details of information stored in the storage unit 12 will be described later.

The communication module 13 is a communication interface for connecting the server apparatus 1 with a network. The communication module 13 may be configured to include, for example, a network interface board, a wireless communication interface for wireless communication, and the like. The server apparatus 1 is capable of performing data communication with another computer (for example, another server apparatus 1 or each company terminal 2) via the communication module 13.

The input/output device 14 is a device that receives an input operation performed by an operator and presents information to the operator. Specifically, the input/output device 14 includes a device for inputting, such as a mouse and a keyboard, and a device for outputting, such as a display and a speaker. The input/output device 14 may be, for example, integrally configured by a touch panel display or the like.

For a specific hardware configuration of the server apparatus 1, omissions, replacements, or additions of components are applicable as needed according to embodiments. For example, the control unit 11 may include a plurality of hardware processors. The hardware processor may be a microprocessor, an FPGA, a GPU, or the like. The input/output device 14 may be omitted or an input/output device (for example, an optical disk drive or the like) other than the illustrated one may be added. The server apparatus 1 may be made up of a plurality of computers. In this case, the hardware configuration of each computer may be the same or may be different.

FIG. 6 is a diagram that schematically shows an example of the hardware configuration of the company terminal 2 according to the present embodiment. The company terminal 2 is configured as a computer including a control unit 21, a storage unit 22, a communication module 23, and an input/output device 24.

The company terminal 2, as in the case of the server apparatus 1, may be configured as a computer including a processor (a CPU, a GPU, or the like), a main storage device (a RAM, a ROM, or the like), and an auxiliary storage device (an EPROM, a hard disk drive, a removable medium, or the like). One, some, or all of the functions (software modules) may be implemented as hardware modules by a hardware circuit, such as an ASIC and an FPGA.

The control unit 21 is an arithmetic unit that implements various functions (software modules) of the company terminal 2 by running predetermined programs. The control unit 21 can be implemented by, for example, a hardware processor, such as a CPU. The control unit 21 may be configured to include a RAM, a read only memory (ROM), a cache memory, or the like.

The storage unit 22 is a device that stores information and is a storage medium, such as a RAM, a magnetic disk, and a flash memory. Programs to be run on the control unit 21, data used by the programs, and the like are stored in the storage unit 22.

The communication module 23 is a communication interface for connecting the company terminal 2 with a network. The communication module 23 may be configured to include, for example, a network interface board, a wireless communication interface for wireless communication, and the like. The company terminal 2 is capable of performing data communication with another computer (for example, the server apparatus 1) via the communication module 23.

The input/output device 24 is a device that receives an input operation performed by an operator and presents information to the operator. Specifically, the input/output device 24 includes a device for inputting, such as a mouse and a keyboard, and a device for outputting, such as a display and a speaker. The input/output device 24 may be, for example, integrally configured by a touch panel display or the like.

For a specific hardware configuration of the company terminal 2, as in the case of the server apparatus 1, omissions, replacements, or additions of components are applicable as needed according to embodiments.

### Software Configuration

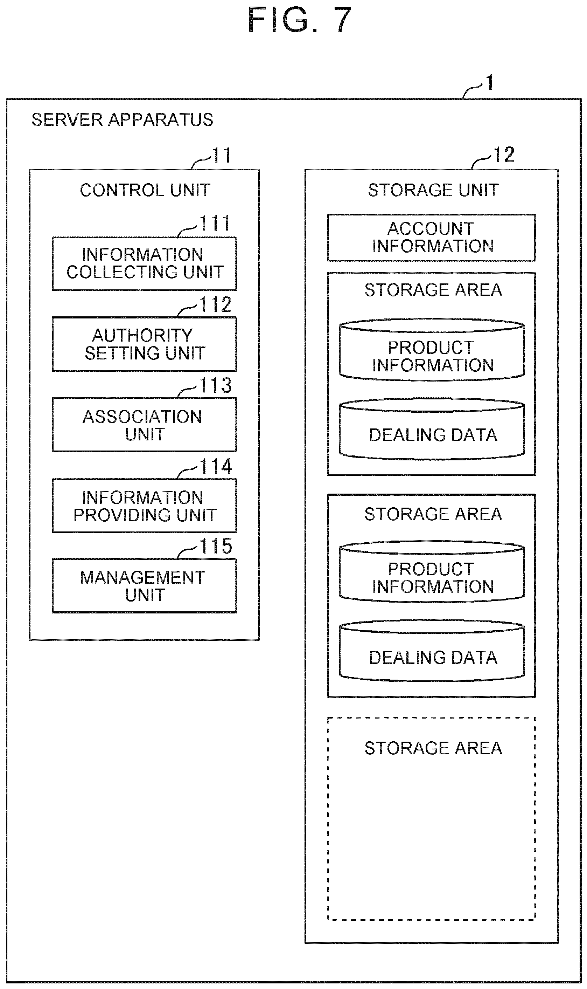

Next, the software configuration of each of the devices that make up the system will be described. FIG. 7 is a diagram that schematically shows an example of the software configuration of the server apparatus 1 according to the present embodiment. In the present embodiment, the control unit 11 is configured to include five software modules, that is, an information collecting unit 111, an authority setting unit 112, an association unit 113, an information providing unit 114, and a management unit 115. The software modules may be implemented by the control unit 11 (CPU) running the programs stored in the storage unit 12. Information processing executed by the information collecting unit 111, the authority setting unit 112, the association unit 113, the information providing unit 114, and the management unit 115 is synonymous with information processing executed by the control unit 11.

The information collecting unit 111 is configured to execute a process of receiving product information, dealing data, and the like sent from the company terminal 2 and storing the information received in the storage unit 12. The authority setting unit 112 is configured to receive information for setting authority to access product information (hereinafter, permission information) from the company terminal 2. Furthermore, the authority setting unit 112 is configured to execute a process of setting authority to access the product information stored in the storage unit 12 based on the information received.

The association unit 113 is configured to acquire information for associating pieces of product information with each other, from the company terminal 2 by performing interaction with the company terminal 2. Furthermore, the association unit 113 is configured to execute a process of writing information indicating an association relationship on the product information stored in the storage unit 12 based on the information acquired. The association unit 113 is configured to execute a process of receiving a request to give termination information and giving the termination information to the product information stored in the storage unit 12 in response to this request. A product tree is formed by reflecting association and giving termination. In other words, forming a product tree is saving association information and termination information in the storage unit 12. The association unit 113 is configured to generate a product tree according to the result of association and giving termination.

The information providing unit 114 is configured to execute information processing relevant to a product tree and output a result obtained by executing information processing. The information processing relevant to a product tree may include a process of performing computation on traceability for a product tree. Outputting the result obtained by executing information processing may include a process of providing the company terminal 2 with information on the product tree generated. In an example, the information providing unit 114 is configured to generate information on a product tree and output information on the product tree generated.

The management unit 115 is configured to accept an application for approval to join from a company that desires to join the platform among companies included in the supply chain and issue an account to the company. In an example, the management unit 115 is configured to verify the authenticity of the company and issue an account on condition that the verification is successful. A specific processing method of issuing an account will be described later.

In the present embodiment. the storage unit 12 is configured to include a plurality of logical storage areas. Different access authority can be set to each of the plurality of storage areas like, for example. an area in which access authority is given to Company A, an area in which access authority is given to Company B, and an area in which access authority is given to both Company A and Company B. The authority setting unit 112 sets access authority by storing product information received from the company terminal 2 in an appropriate storage area. A specific processing method will be described later.

Account information is stored in the storage unit 12. In the present embodiment, an operator of each company logs onto the server apparatus 1 by using a corresponding account of the company via the company terminal 2 to perform interaction between the server apparatus 1 and the company terminal 2. Account information is information on an account corresponding to each of the companies that make up the supply chain. Logging on by using an account is an example of a corresponding company accessing the server apparatus 1. However, a method of accessing the server apparatus 1 is not limited to such an example and may be selected as needed according to embodiments.

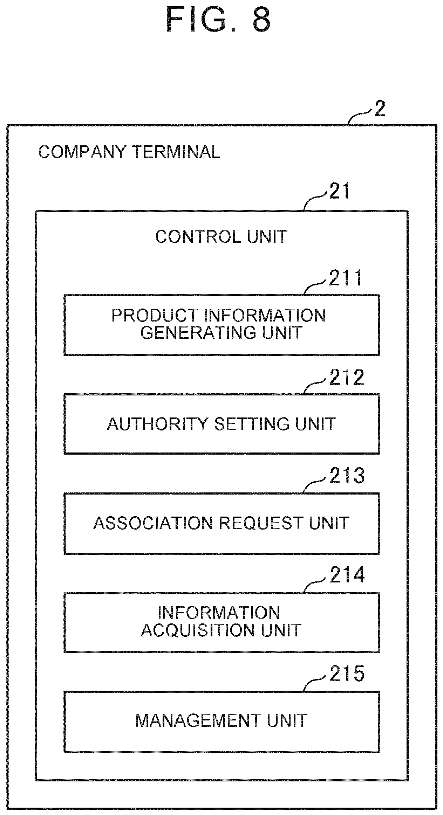

FIG. 8 is a diagram that schematically shows the software configuration of the company terminal 2 according to the present embodiment. In the present embodiment, the control unit 21 is configured to include five software modules, that is, a product information generating unit 211, an authority setting unit 212, an association request unit 213, an information acquisition unit 214, and a management unit 215. The software modules may be implemented by the control unit 21 (CPU) running the programs stored in the storage unit 22. Information processing executed by the product information generating unit 211, the authority setting unit 212, the association request unit 213, the information acquisition unit 214, and the management unit 215 is synonymous with information processing executed by the control unit 21.

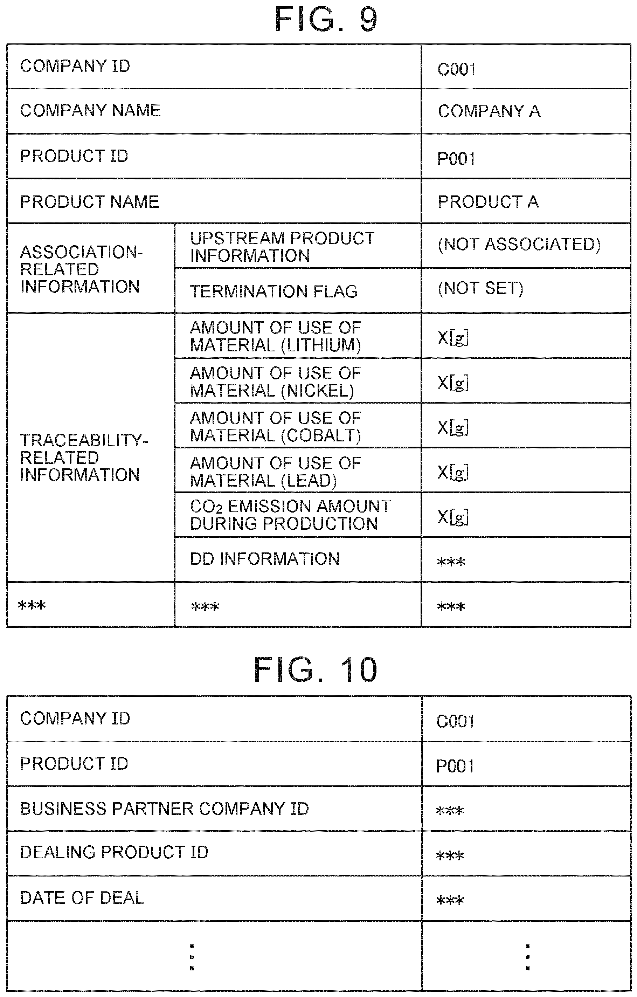

The product information generating unit 211 is configured to generate information on products (product information) of the company corresponding to the company terminal 2. FIG. 9 is an example of product information generated by the product information generating unit 211. Product information may be input via an operator of the company terminal 2. In the present embodiment, product information is configured to include fields of company ID, company name, product ID, and product name. A company ID and a company name are respectively an identifier and a name of a company that produces a target product (that is, a company that uses the company terminal 2). A product ID and a product name are respectively an identifier and a name of the target product.

Furthermore, product information is configured to include association-related information. Association-related information is information for identifying an upstream product associated with the target product. In the present embodiment, association-related information includes fields of "upstream product information" and "termination flag".

The upstream product information field is configured to store information for identifying product information corresponding to the upstream product (that is, a product used in a process of producing the target product and included in the target product) associated with the target product. The upstream product information field is used when the server apparatus 1 associates products with each other. Basically, in the phase in which product information is generated, the target product is not associated with the upstream product, so a value indicating the upstream product does not need to be stored in the upstream product information field.

The termination flag field is configured to store a flag indicating whether a target product is a leaf node in a product tree, that is, a node positioned at the most upstream side (end). In the present embodiment, since the company terminals 2 send product information, the flag is used to determine whether a product is further associated on the upstream side or no more association occurs (a target product is positioned at the most upstream side) for a product in a product tree. In other words, the termination flag field is used at the time when the server apparatus 1 finalizes association of products with each other. Basically, in the phase in which product information is generated, an association relationship of the target product is not determined, so "0 (currently not a termination)" may be stored in the termination flag field. Finally, to generate a product tree, product information of each company, stored in the server apparatus 1, is set to a state of any one of "association with the upstream product has been performed" and "the termination flag is set to "1"".

Furthermore, product information is configured to include traceability-related information. In an example, traceability-related information may include the amount of use of materials (for example, upstream products) per the amount of production of products, information on the recycling rate of predetermined raw materials, the amount of emission of greenhouse effect gas emitted at the time of producing products (CFP value), due diligence-related information, or a combination of some of them. Examples of the predetermined raw materials may include lithium, nickel, cobalt, lead, and graphite. The recycling rate may be directly represented or may be indirectly represented like, for example, a combination of a total use amount and the amount of use of recycled materials. These values are values corresponding to a process of producing a target product. For example, in the example shown in FIG. 4, the amount of greenhouse effect gas, or the like, emitted in production activity for the product A is stored in the traceability-related information included in the product information A. The traceability-related information included in the product information A does not include information on a process until an upstream product is produced (for example, the amount of greenhouse effect gas emitted by the time the upstream product B is produced, or the like).

The traceability-related information may be selected as needed according to embodiments. In an example, the amount of emission of greenhouse effect gas (carbon footprint) may include the amounts of emission of scope 1, scope 2, and scope 3. The scope 1 may be the amount of direct emission of greenhouse effect gas by itself. The scope 2 may be the amount of indirect emission resulting from use of electricity, heat, and vapor supplied from another company. The scope 3 may be the amount of indirect emission other than the scope 1 or the scope 2. In an example, the due diligence-related information may be a technical document indicating that, for a product that contains a target raw material (for example, cobalt, natural graphite, lithium, nickel, or the like), proves that obligations of the amount of raw materials contained in the product and responsible mineral procurement of a smelter or the like are fulfilled. In another example, the due diligence-related information may include a score indicating a degree to which the obligations are fulfilled.

The product information generating unit 211 is configured to further generate dealing data of the company corresponding to the company terminal 2. FIG. 10 is an example of dealing data generated by the product information generating unit 211. Dealing data may be input via an operator of the company terminal 2. In the example shown in FIG. 10, the dealing data is configured to include fields of company ID, product ID, business partner company ID, dealing product ID, date of deal, and the like.

The company ID field is configured to store an identifier of a company that produces a target product (that is, a company that uses the company terminal 2). The product ID field is configured to store an identifier of the target product. The business partner company ID field is configured to store an identifier of a company that is a vendor of a product used to produce the target product (a product included in the target product). An identifier stored in the business partner company ID field may be an identifier with which a company name of a business partner company can be identified. However, when a business partner company has joined (or desires to join) anonymously a platform, an identifier with which companies other than a company that produces the target product, the operator of the server apparatus 1, and the like cannot identify the company name of the company is stored in the business partner company ID field. The dealing product ID field is configured to store an identifier of a product supplied from a business partner company (a product used to produce the target product). The date-of-deal field is configured to store a date on which dealing related to a dealing product between a company that produces the target product and a business partner company is performed.

The configuration of the dealing data is not limited to the example shown in FIG. 10, and addition, modification, and deletion of fields are possible as needed. For example, dealing data may be configured to further include fields of the amount of dealing products purchased, an identifier of a company that has transported the dealing product from a business partner company to the company, an identifier of a customer company to which the target product is sold (supplied), an identifier of a company that has transported the target product from the company to the customer company, and the like. The above-described dealing data may be configured to be included in product information of the target product.

The product information generating unit 211 is configured to acquire such information via the operator of the company terminal 2 and send the information to the server apparatus 1 at selected timing.

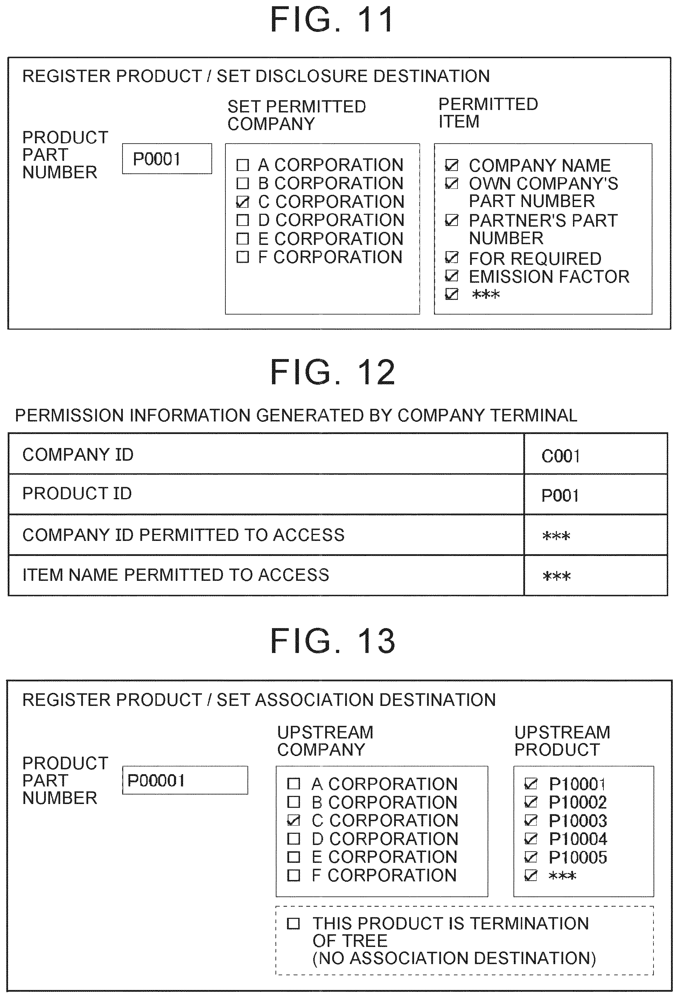

The authority setting unit 212 is configured to designate a downstream company permitted to access product information sent from the company terminal 2 to the server apparatus 1. FIG. 11 is an example of a user interface output by the authority setting unit 212. As shown in the drawing, the authority setting unit 212 is configured to receive designation of a downstream company permitted to access a selected own company's product. FIG. 12 is an example of permission information generated by the authority setting unit 212 based on information input. The authority setting unit 212 is configured to send permission information to the server apparatus 1 at selected timing. Access authority may be set in units of product information or may be set in units of item included in product information ("permission item" in FIG. 11). Thus, for example, partial disclosure like, for example, the presence of a product is disclosed but specific information on materials used, the amount of use, and the like is not disclosed, is possible.

A list of companies shown on the user interface of FIG. 11 may be a list of companies having dealt with a company that produces the target product (a company that uses the company terminal 2) in the past. Therefore, the authority setting unit 212 may generate a list of companies based on the dealing data generated by the product information generating unit 211. When a company that has anonymously joined the platform is included in companies that has dealt with the company that produces the target product in the past, the authority setting unit 212 may generate the above-described list by using an identifier instead of the company name of the company. The identifier at this time, as in the case of the identifier used in the dealing data described with reference to FIG. 10, is an identifier with which companies other than the company that produces the target product, the operator of the server apparatus 1, or the like cannot identify the company name of the company.

The association request unit 213 is configured to make a request of the server apparatus 1 to associate its own company's product information sent to the server apparatus 1 with an upstream product. In an example, initially, the association request unit 213 sends its own company ID and product ID to the server apparatus 1 and makes a request of the server apparatus 1 to associate the product ID with corresponding product information. In contrast, the server apparatus 1 generates a user interface containing a list of product information (that is, candidates to be associated) permitted to access from a target company and provides the user interface generated to the company terminal 2. FIG. 13 is an example of the user interface containing a list of products permitted to access from a target company.

The list of products shown in FIG. 13 may be a list of products that have been dealt with its own company in the past. The server apparatus 1 may generate the list further based on the dealing data stored in the storage unit 12.

Subsequently, the association request unit 213 is configured to allow the operator to select an upstream product to be associated, from the list. The association request unit 213 is configured to send an identifier of a product that is a source of association (downstream product) and an identifier of an upstream product that is a destination of association in pair to the server apparatus 1. The server apparatus 1 is allowed to associate pieces of product information with each other accordingly.

When there is no upstream product associated with a target product, it is possible to explicitly indicate the fact by, for example, checking a checkbox indicated by the dashed line in FIG. 13. In this case, association of pieces of product information with each other is not performed.

The information acquisition unit 214 is configured to make a request of the server apparatus 1 to provide a product tree and output information sent from the server apparatus 1.

The management unit 215 is configured to mediate an application for approval for another company to join the platform. In an example, another company is an upstream company that has dealt with the company. A specific processing method of mediating an application for approval to join the platform will be described later.

### Details of Process on Formation of Product Tree

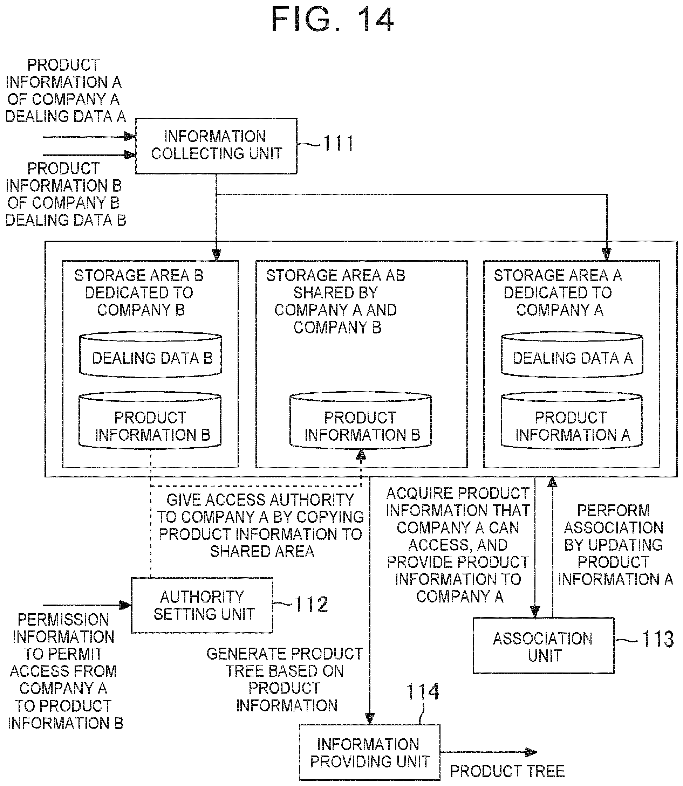

Next, specific details of a process executed by the server apparatus 1 and the company terminal 2 will be described. FIG. 14 is a diagram that shows an example of the flow of a process executed by the server apparatus 1 based on a request from the company terminal 2.

The process executed by the server apparatus 1 is divided into the following four phases:
(1) a first phase in which product information and dealing data sent from the company terminal 2 is received and the information received is stored;
(2) a second phase in which permission information sent from the company terminal 2 is received and authority to access the product information is set according to the permission information received;
(3) a third phase in which pieces of product information are associated with each other by performing interaction with the company terminal 2; and
(4) a fourth phase in which information on a product tree is provided based on the result of association.

In the example of FIG. 14, it is assumed that Company A is a downstream company and Company B is an upstream company. It is also assumed that a product produced by Company A is a product A and a product produced by Company B is a product B. It is also assumed that product information corresponding to the product A is product information A and product information corresponding to the product B is product information B.

In the first phase, the information collecting unit 111 of the server apparatus 1 acquires product information and dealing data from the product information generating unit 211 of the company terminal 2. In the example of FIG. 14, the server apparatus 1 acquires the product information A and dealing data A from the company terminal 2 corresponding to Company A and acquires the product information B and dealing data B from the company terminal 2 corresponding to Company B. The information collecting unit 111 saves the product information A and the dealing data A in a storage area of which access authority is given to only Company A (hereinafter, storage area A). The information collecting unit 111 saves the product information B and the dealing data B in a storage area of which access authority is given to only Company B (hereinafter, storage area B). In this way, the information collecting unit 111 saves product information and dealing data sent from any company in a dedicated storage area of which access authority is given to only the company. Timing to register dealing data is not limited to such an example and may be selectively determined. In an example, dealing data may be generated each deal of a target produce, and dealing data generated may be saved in a dedicated storage area each deal.

In the second phase, the authority setting unit 112 of the server apparatus 1 receives permission information from the authority setting unit 212 of the company terminal 2 and sets authority to access product information according to the permission information received. Permission information is the one that associates a product with a company that permits access to product information of the product as shown in FIG. 12.

In the example of FIG. 14, it is assumed that the authority setting unit 112 receives permission information to permit access from Company A that is the downstream company to the product information B of the upstream company. In this case, the authority setting unit 112 copies the product information B stored in the storage area B to a storage area of which access authority is given to both Company A and Company B (hereinafter, storage area AB). Thus, the product information B is placed in a state accessible from both Company A and Company B. When authority to access a specific item included in product information is not set, the item is excluded from those to be copied to the storage area AB.

In the following description, a storage area of which access authority is given to only a specific company is referred to as "dedicated storage area", and a storage area of which access authority is given to a plurality of companies is referred to as "shared storage area".

Product information is copied by the server apparatus 1 in response to reception of permission information from the company terminal 2. In other words, the company terminal 2 sends permission information to the server apparatus 1 to cause the server apparatus 1 to execute an operation to copy product information identified by the permission information from a dedicated storage area of a target company to a shared storage area accessible from a downstream company.

In the third phase, the association unit 113 of the server apparatus 1 receives an association request from the association request unit 213 of the company terminal 2 and associates pieces of product information with each other based on the association request received.

Initially, the association unit 113 receives an association request from the company terminal 2. The association request is sent from the company terminal 2 of a downstream company. In the example of FIG. 14, it is assumed that the company terminal 2 of Company A has sent an association request. The association request includes a company ID and a product ID of a target product. The association unit 113 acquires product information stored in a storage area accessible from the company and generates a list of product information acquired. In the example of FIG. 14, the product information B stored in the storage area AB is accessible from Company A. Therefore, in the company terminal 2 of Company A, the product information B is selectable as a destination of association.

The association request unit 213 of the company terminal 2 presents a list to an operator and allows the operator to select products to be associated. In the case of this example, the product A and the product B are targets to be associated with each other. The operator, for example, inputs information indicating that the upstream product is the product B for the product A via the input/output device 24. The association request unit 213 sends data for associating the upstream product (product B) with the downstream product (product A) (association data) to the association unit 113.

As illustrated in FIG. 9, product information has a field on a product that is a destination of association (association-related information). The association unit 113 stores information corresponding to the product information B (that is, the upstream product) in the association-related information of the product information A based on the above-described association data. For example, an identifier of an upstream product, an identifier of a company that produces the upstream product, and the like are stored in the association-related information.

A pointer or the like to product information that is a destination of association may be stored in the association-related information. A pointer is to point out the address or the like of product information corresponding to an upstream product. With the process described above, part of a tree structure in which product information of the downstream product is a parent node and product information of the upstream product is a child node is formed.

At the terminal of the product tree, further more association is not performed. In this case, the association request unit 213 sends data indicating that the product is the terminal of a tree instead of sending association data. When the association unit 113 receives the data, the association unit 113 sets "1" to the termination flag field of corresponding product information. In other words, in the third phase, any one of "a process of setting an upstream product that is a destination of association" and "a process of setting a termination flag" is executed.

In the fourth phase, the information providing unit 114 of the server apparatus 1 generates information on a product tree based on the product information stored and outputs information on the product tree. Generating information on a product tree may include a process of, after a link between nodes is formed by association of pieces of product information with each other, generating various pieces of information on products (for example, information on traceability, an image representing a link relationship between products in a tree diagram, or the like). The process of generating information on a product tree is an example of information processing on the product tree. To generate information on a product tree, all the association of pieces of product information with each other needs to be complete, and "1" needs to be set to the termination flags of all the leaf nodes. When such conditions are satisfied, the information providing unit 114 is allowed to appropriately generate the information.

A product tree according to the present embodiment, as described with reference to FIG. 3, is the one representing a supply relationship among pieces of product information in a supply chain in a tree diagram. The information providing unit 114 is capable of generating an image representing a tree diagram based on product information.

Furthermore, when the information providing unit 114 generates information on a product tree, the information providing unit 114 integrates traceability-related information defined in each piece of product information with one another and outputs the result. In an example, when the information providing unit 114 generates information on a product tree, the information providing unit 114 may repeatedly execute a process of sequentially integrating traceability-related information defined for each piece of product information from the most upstream side toward the most downstream side. Examples of traceability-related information subjected to integration include the amount of emission of carbon dioxide, a recycling rate related to a predetermined raw material, and a score for due diligence. When the traceability-related information is a numeric value, integration may be performed by mathematical operations. When the traceability-related information is information other than a numerical value (for example, due diligence-related information or the like), integration may be simple information collection.

In another example, product information may include information indicating a location of traceability-related information of a corresponding product (hereinafter, "location information"; typically, address, pointer, or the like). In this case, traceability-related information does not need to be included in product information. Integration may be to collect location information included in product information.

The information providing unit 114 may output a product tree generated in an image format. Simultaneously, the information providing unit 114 may output traceability-related information corresponding to a selected product. Furthermore, the information providing unit 114 may provide a product tree generated to the company terminal 2 in response to a request from the company terminal 2 (information acquisition unit 214). It may be not adequate to disclose the entire product tree to a specific company. For this reason, when the information providing unit 114 provides a product tree to the company terminal 2 corresponding to a company, the information providing unit 114 may execute a process of not disclosing a range of which no access authority is given to the company.

### Flow of Process

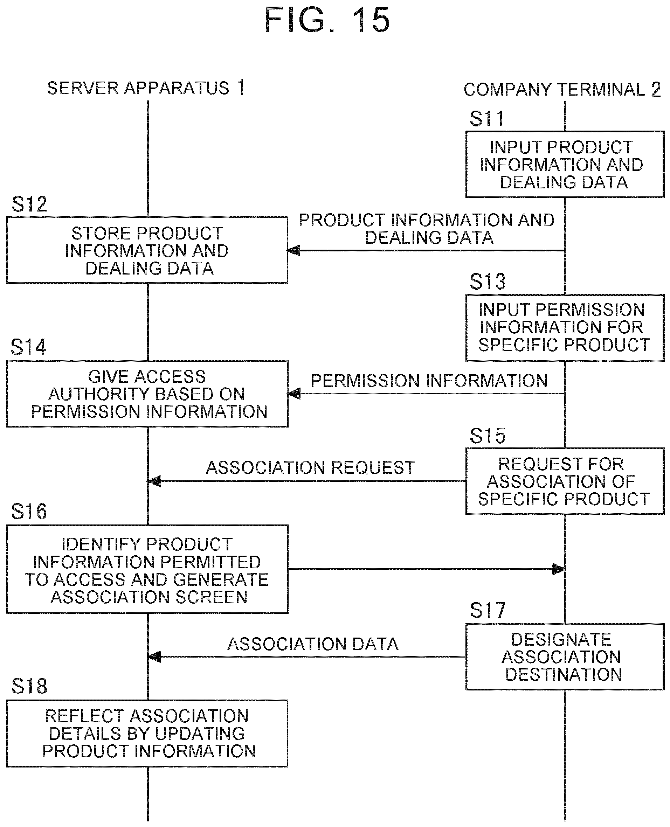

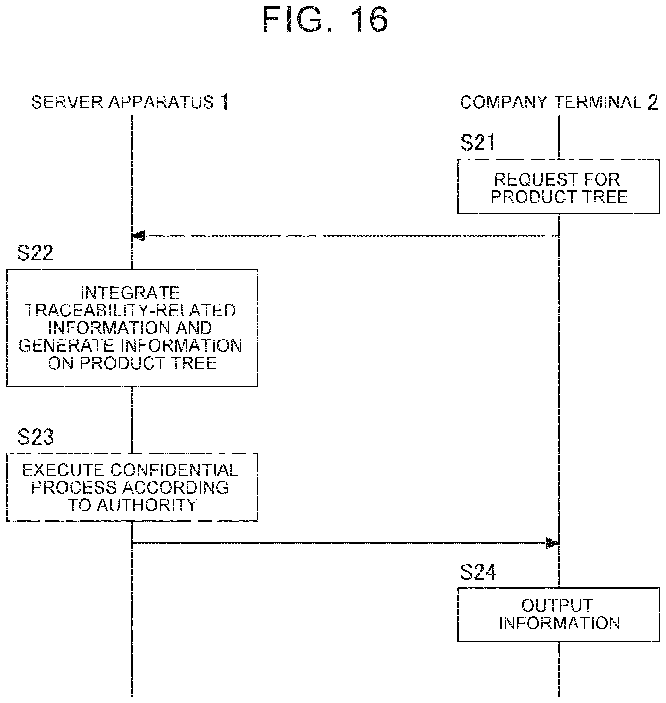

Next, the flow of a process executed by the server apparatus 1 and the company terminal 2 in a case where its own company's product information is registered by the company terminal 2 will be described with reference to FIG. 15 and FIG. 16. FIG. 15 is a sequence diagram corresponding to the first to third phases.

In an example, interaction between the server apparatus 1 and the company terminal 2 is started when the operator of each company logs onto the server apparatus 1 by using the corresponding account of the company via the company terminal 2. In this example, it is assumed that the operator of each company has logged onto the server apparatus 1 by using its own company's account.

Initially, in step S11, the product information generating unit 211 of the company terminal 2 acquires its own company's product information and dealing data via the operator and sends the product information and dealing data acquired to the server apparatus 1. The product information and dealing data sent are received by the server apparatus 1 (information collecting unit 111) and stored in the storage unit 12 (step S12). At this time, the information collecting unit 111 saves the product information and dealing data in a storage area of which access authority is given to only the company that produces the corresponding product.

After that, in step S13, the authority setting unit 212 of the company terminal 2 receives, via the operator, input of information to designate a downstream company permitted to access (permission information) the product information sent in step S11. In this step, a user interface as described with reference to FIG. 11 may be provided, and a combination of a selected product with a downstream company permitted to access the product information may be allowed to be designated. The permission information input is sent to the server apparatus 1.

In step S14, the authority setting unit 112 of the server apparatus 1 gives authority to access target product information based on the permission information received. In this step, as described with reference to FIG. 14, the authority setting unit 112 gives authority to access selected product information to a selected company by copying the target product information to a storage area of which access authority is given to a plurality of companies. When there is no appropriate storage area of which access authority is given, the authority setting unit 112 may execute a process of generating a new storage area and giving access authority to an appropriate company.

Subsequently, in step S15, the association request unit 213 of the company terminal 2 sends data to make a request of the server apparatus 1 to associate the product information sent to the server apparatus 1 with an upstream product (association request). The association request includes its own company ID and a product ID of a target product.

In step S16, the server apparatus 1 (association unit 113) generates a list of product information permitted to access from a target company and provides the company terminal 2 with a user interface containing the list. In this step, the server apparatus 1 may provide a user interface as described with reference to FIG. 13 to the company terminal 2 and designate a combination of a selected product with an upstream product associated with the product.

In step S17, the association request unit 213 of the company terminal 2 receives from the operator a designated combination of a target product with an upstream product associated with the product. The association request unit 213 generates data indicating association of an upstream product with a downstream product (association data) and sends the association data generated to the server apparatus 1.

In step S18, the association unit 113 of the server apparatus 1 updates the product information stored based on the association data and reflects details of association of the pieces of product information with each other. Association of pieces of product information with each other may be performed by storing information (identifier, pointer, or the like) on an upstream product with association-related information of product information of a downstream product.

When there is no downstream company, processes of step S13 to step S14 may be omitted. Similarly, when there is no upstream company (when there is no destination of association for a target product), the association unit 113 may execute a process of setting the above-described termination flag instead of making a request to associate pieces of product information with each other. In this case, the processes of the above-described step S15 to step S18 are omitted.

FIG. 16 is a sequence diagram corresponding to the above-described fourth phase. Initially, in step S21, the information acquisition unit 214 of the company terminal 2 makes a request of the server apparatus 1 to provide a product tree. The request includes, for example, an identifier of a target product. The target product may be an end product or may be a product other than the end product (intermediate product).

The server apparatus 1 (information providing unit 114) having received the request generates information on a product tree through the above-described process (step S22). At this time, the information providing unit 114 executes a process of integrating traceability-related information defined for each piece of product information from the most upstream side toward the most downstream side. The result of integration may be reflected on each piece of product information.

Subsequently, in step S23, the server apparatus 1 executes a process of placing information, of which no access authority is given, in a confidential state based on the access authority of a target company. When, for example, the presence itself of product information of another company is not disclosed to a company, the server apparatus 1 may execute a process of placing the presence of the product information in a confidential state. When only a specific item included in product information is undisclosed, the server apparatus 1 may execute a process of placing the details of the item in a confidential state. Information on a product tree subjected to the confidential process is provided to the company terminal 2 (information acquisition unit 214) and output (step S24).

### Details of Process of Issuing Account

Next, specific details of a process of issuing an account of a company that newly joins the platform according to the present embodiment will be described. Here, it is assumed that the downstream company has already joined the platform (the account information of the downstream company is already registered in the server apparatus 1) and the upstream company has not joined the platform yet (the account information of the upstream company is not registered in the server apparatus 1). The downstream company is an example of the first company, and the upstream company is an example of the second company. In such a case, unless product information of the upstream company is registered with another alternative method, the downstream company cannot associate its own company's product with the upstream product. On the other hand, if an anonymous company is allowed to freely join in order to widely seek for registration of product information of the upstream company, it is difficult to ensure the authenticity of joining companies. Therefore, in the present embodiment, when the upstream company desires to anonymously join the platform, the upstream company is caused to submit an application for approval to join the platform via the downstream company that has already joined the platform in order to ensure the authenticity of the upstream company on the system.

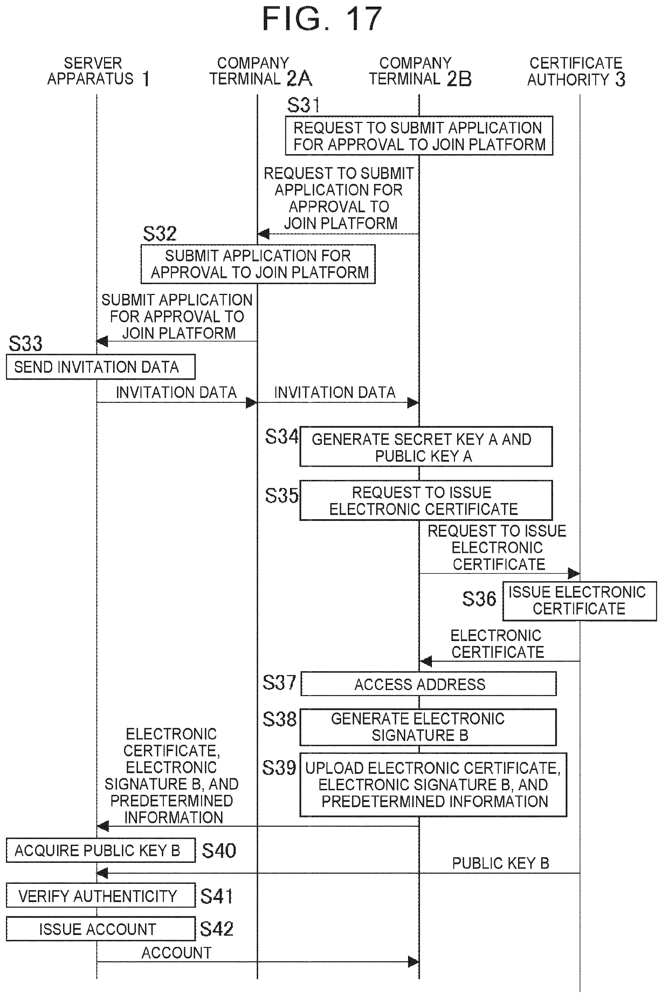

FIG. 17 is a sequence diagram of a process executed in the system according to the present embodiment. In the example shown in FIG. 17, the company terminal corresponding to the downstream company is referred to as company terminal 2A, and the company terminal corresponding to the upstream company is referred to as company terminal 2B. The downstream company is a company that belongs to the supply chain, and is a company of which the account information is registered in the server apparatus 1. The upstream company is a company that belongs to the supply chain, and is a company of which the account information is not registered in the server apparatus 1. It is assumed that dealing data between the downstream company and the upstream company is registered in the dedicated storage area of the downstream company in the storage unit 12 of the server apparatus 1.

In the upstream company, the operator sends an application request for approval to join the platform to the company terminal 2A through the company terminal 2B (step S31). An application request for approval to join the platform from the upstream company to the downstream company may be performed orally or by another method without intervening the company terminal 2A or the company terminal 2B.

When the company terminal 2A receives an application request for approval for the upstream company to join the platform, the operator of the company terminal 2A logs onto the server apparatus 1 from the company terminal 2A by using the account of the downstream company. The operator of the company terminal 2A inputs a request for an application for approval for the upstream company to join the platform via the input/output device 24. When input of the request completes, the management unit 215 of the company terminal 2A sends an application for approval for the upstream company to join the platform to the server apparatus 1 (step S32). The application for approval to join the platform includes an identifier of the upstream company. The identifier of the upstream company, included in the application for approval to join the platform, is the same as an identifier used for dealing data stored in a dedicated storage area of the downstream company. However, the identifier of the upstream company in this case is an identifier with which companies other than the downstream companies, the operator of the server apparatus 1, and the like cannot identify the upstream company.

When the application for approval to join the platform, sent from the company terminal 2A, is received by the server apparatus 1, the management unit 115 of the server apparatus 1 sends invitation data to the company terminal 2A (step S33). The invitation data includes an address and a request to submit an electronic certificate issued by the certificate authority 3. For example, the address included in the invitation data is a URL of a web site, provided through execution of the process of the web server by the server apparatus 1. In an example, the web site may be a web site for uploading various pieces of data of an electronic certificate or the like to the server apparatus 1. The URL of such a web site may be a one-time URL for which an accessible period or an accessible number of times is limited. When the company terminal 2A receives invitation data sent from the server apparatus 1, the management unit 115 of the company terminal 2A transfers the invitation data received from the server apparatus 1 to the company terminal 2B.

Sending invitation data from the company terminal 2A to the company terminal 2B may be performed by the operator of the company terminal 2A using e-mail or the like. When an application for approval to join the platform, sent from the company terminal 2A to the server apparatus 1, includes contact information (for example, mail address) of the upstream company, the management unit 115 of the server apparatus 1 may send an invitation mail to the contact information. The contact information may be contact information (for example, an address or the like of a free mail) with which the upstream company cannot be identified.

When the invitation data is received by the company terminal 2B of the upstream company, the operator of the company terminal 2B prepares an electronic certificate in accordance with the request included in the invitation data (the request to submit an electronic certificate issued by the certificate authority 3). In an example, the operator of the company terminal 2B generates a secret key of the upstream company and a public key corresponding to the secret key (step S34). Hereinafter, the secret key of the upstream company is referred to as secret key A, and the public key corresponding to secret key A is referred to as public key A. When secret key A and public key A are generated, the operator of the company terminal 2B sends a request to issue an electronic certificate to the certificate authority 3 through the company terminal 2B (step S35). The request to issue an electronic certificate includes public key A of the upstream company. Secret key A and public key A of the upstream company may be generated by the certificate authority 3. In this case, the operator of the company terminal 2B may send a request to generate secret key A and public key A to the certificate authority 3 together with a request to issue an electronic certificate. The request to issue an electronic certificate to the certificate authority 3 may be performed without intervening the company terminal 2B.

In the certificate authority 3 having received the request to issue an electronic certificate, identity verification of the upstream company is performed based on information of a register, a certificate of tax payment, and the like. When identity verification of the upstream company is successful, the certificate authority 3 creates owner identification information of the upstream company. The certificate authority 3 calculates a hash value of plain text including the owner identification information created and public key A of the upstream company. The certificate authority 3 generates an electronic signature of the certificate authority 3 by encrypting the hash value calculated with the secret key of the certificate authority 3. Hereinafter, the secret key of the certificate authority 3 is referred to as secret key B, and a public key corresponding to secret key B is referred to as public key B. An electronic signature generated by the certificate authority 3 is referred to as electronic signature A. The certificate authority 3 generates an electronic certificate including the owner identification information of the second company, the public key of the second company, and electronic signature A of the certificate authority 3. The certificate authority 3 sends the electronic certificate generated to the company terminal 2B of the upstream company (step S36). The certificate authority 3 registers the electronic certificate generated to a repository.

In another example, generation of secret key A and public key A and acquisition of an electronic certificate may be executed at selected timing before invitation data is received. In other words, step S34, step S35, and step S36 in FIG. 17 may be executed at selected timing before step S33. In another example, step S34 may be executed by the certificate authority 3. In this case. step S34 may be omitted, and the certificate authority 3 may generate secret key A and public key A in step S36.

When the electronic certificate issued from the certificate authority 3 is received by the company terminal 2B, the operator of the company terminal 2B accesses the address (URL) included in the invitation data through the browser of the company terminal 2B (step S37). When access of the company terminal 2B to the address included in the invitation data is accepted by the server apparatus 1, interaction with the company terminal 2B is performed through execution of the process of the web server by the server apparatus 1. In an example, the server apparatus 1 uploads the electronic certificate, an electronic signature, and predetermined information to the company terminal 2B through interaction with the company terminal 2B. The electronic signature in this case, different from electronic signature A generated by the certificate authority 3, is generated by encrypting the predetermined information with secret key A of the upstream company. Hereinafter, an electronic signature generated by the upstream company is referred to as electronic signature B.

In an example, the predetermined information may be information designated by the server apparatus 1. The information designated by the server apparatus 1 may be information provided by the downstream company. For example, the server apparatus 1 may generate predetermined information based on dealing data on dealing between the upstream company and the downstream company. In this case, the management unit 115 of the server apparatus 1 identifies dealing data between the downstream company and the upstream company by accessing dealing data stored in the dedicated storage area of the downstream company. For example, in the case of the example shown in FIG. 10, the management unit 115 identifies dealing data of which the identifier that coincides with the identifier of the upstream company, included in the application for approval to join the platform, is registered in the business partner company ID field. The management unit 115 selects one or more pieces of dealing data from among the pieces of dealing data identified. The management unit 115 of the server apparatus 1 may calculates a hash value of the one or more pieces of dealing data selected and use the hash value calculated as predetermined information. Alternatively, the management unit 115 of the server apparatus 1 may encrypt the one or more pieces of dealing data selected and use the one or more pieces of dealing data encrypted as predetermined information. To avoid a situation that a third party identifies one or more pieces of dealing data selected by the server apparatus 1, predetermined information may be generated by adding a predetermined value to the one or more pieces of dealing data and hashing or encrypting the dealing data to which the predetermined value is added. The predetermined value may be a selected value (for example, a random number, a time stamp, or the like) obtained by the server apparatus 1.

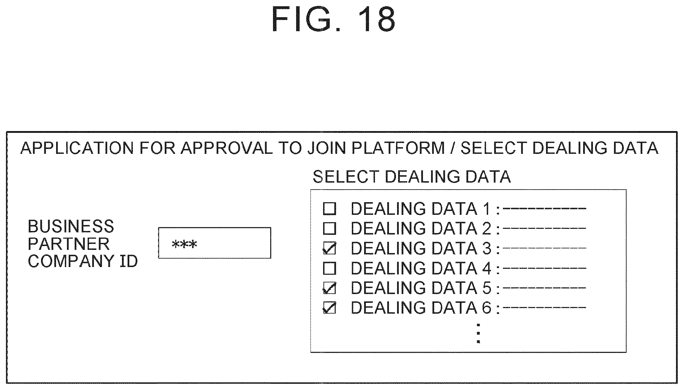

In another example, one or more pieces of dealing data used to generate predetermined information may be selected from among multiple pieces of dealing data designated through the account of the downstream company. For example, the management unit 115 sends, to the company terminal 2A, a list of dealing data for which the identifier that coincides with the identifier of the upstream company, included in the application for approval to join the platform, is registered in the business partner company ID field. In the company terminal 2A having received the list of dealing data, the management unit 215 shows the list of dealing data received from the server apparatus 1 to the operator and accepts designation of multiple pieces of dealing data from among the list. FIG. 18 is an example of a user interface output by the management unit 215. In this case, as illustrated in FIG. 18, the management unit 215 is configured to accept designation of multiple pieces of dealing data from among the list of dealing data. When the operator of the company terminal 2A designates multiple pieces of dealing data on the user interface illustrated in FIG. 18, the management unit 215 sends, to the server apparatus 1, information for identifying the multiple pieces of dealing data designated. In the server apparatus 1 having received the information, the management unit 115 selects one or more pieces of dealing data from among the multiple pieces of dealing data designated and generates predetermined information from the one or more pieces of dealing data selected.

Generation of predetermined information may be performed when the server apparatus 1 receives a request to submit an application for approval to join the platform, sent from the company terminal 2A of the downstream company. In this case, the management unit 115 of the server apparatus 1 may accept designation of the multiple pieces of dealing data through interaction with the company terminal 2A of the downstream company. The management unit 115 of the server apparatus 1 may select one or more pieces of dealing data from among multiple pieces of dealing data designated and generate predetermined information by using the one or more pieces of dealing data selected. The management unit 115 of the server apparatus 1 may send invitation data further including the predetermined information generated to the company terminal 2B of the upstream company via the company terminal 2A of the downstream company. When the predetermined information is included in invitation data, generation of electronic signature B by the upstream company may be performed before the company terminal 2B accesses the address included in the invitation data.

When no dealing data between the downstream company and the upstream company is stored in the storage unit 12, multiple pieces of dealing data between the downstream company and the upstream company may be sent from the company terminal 2A to the server apparatus 1 at the time when an application for approval to join the platform is sent from the company terminal 2A to the server apparatus 1. Predetermined information used to generate electronic signature B of the upstream company is not limited to the dealing data and may be, for example, selected information, such as a time stamp and a random number generated by the server apparatus 1 or the company terminal 2B.

At the time of accessing the server apparatus 1, the company terminal 2B generates electronic signature B by encrypting the predetermined information with secret key A (step S38). In an example, the company terminal 2B may generate electronic signature B by hashing plain text including predetermined information and encrypting the hash value obtained with secret key A. When electronic signature B is generated, the operator of the company terminal 2B sends (uploads) the electronic certificate, electronic signature B, and the predetermined information to the server apparatus 1 via the company terminal 2B (step S39). Timing to execute step S38 does not need to be limited to such examples. Step S38 may be executed at selected timing before step S37.

When the electronic certificate, electronic signature B, and the predetermined information sent from the company terminal 2B of the upstream company are received by the server apparatus 1, the management unit 115 of the server apparatus 1 acquires public key B of the certificate authority 3 (step S40). The management unit 115 verifies the authenticity of the upstream company by using public key B acquired (step S41).

In verification of the authenticity of the upstream company, initially, the management unit 115 verifies the validity of the electronic certificate received from the company terminal 2B of the upstream company by using public key B of the certificate authority 3. In other words, the management unit 115 decodes electronic signature A (the electronic signature of the certificate authority 3) included in the electronic certificate by using public key B of the certificate authority 3. The management unit 115 calculates a hash value of plain text of the owner identification information and public key A of the upstream company, included in the electronic certificate. The management unit 115 compares the information obtained by decoding electronic signature A with the hash value calculated. When comparison between the information decoded from electronic signature A and the hash value calculated is successful, the management unit 115 determines, by consulting the repository of the certificate authority 3, whether the electronic certificate expires. When the electronic certificate has not expired, the management unit 115 determines that the electronic certificate is valid (identity verification of the upstream company by the certificate authority 3 is valid).

Subsequently, the management unit 115 verifies the validity of electronic signature B of the upstream company. In other words, the management unit 115 decodes electronic signature B of the upstream company by using public key A included in the electronic certificate. The management unit 115 compares the information obtained by decoding electronic signature B, with the predetermined information. In an example, the management unit 115 may hash the plain text including the predetermined information and compare the hash value obtained with the information decoded. When comparison between the information decoded and the predetermined information is successful, it is proved that electronic signature B is generated by using secret key A corresponding to public key A included in the electronic certificate and the predetermined information included in the invitation data. Thus, it may be regarded that a company having accessed the address included in the invitation data holds secret key A and the company having received the invitation data matches the company having accessed the address. In other words, it is found that the source accessing the address included in the invitation data matches the upstream company subjected to identity verification by the certificate authority 3. When comparison between the information obtained by decoding electronic signature B and the predetermined information is successful, the management unit 115 determines that electronic signature B of the upstream company is valid. A sequence to verify the validity of the electronic certificate and the validity of electronic signature B may be selected.

When verification of the validity of the electronic certificate and electronic signature B received from the company terminal 2B of the upstream company is successful, the management unit 115 of the server apparatus 1 generates an account of the upstream company and sends the account generated to the company terminal 2B (step S42).

### Flow of Process

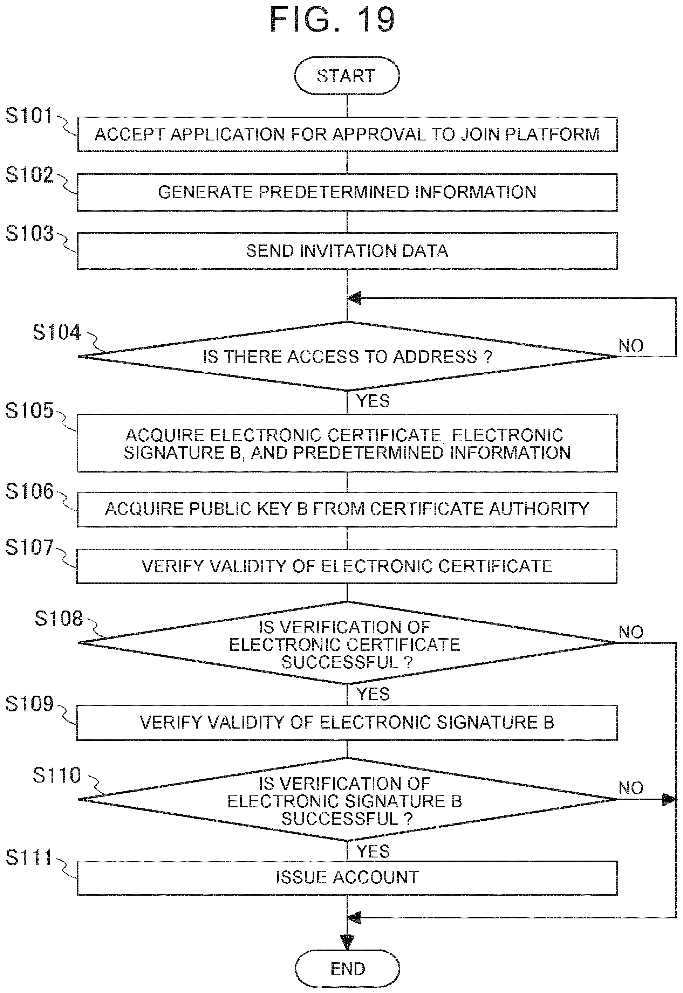

FIG. 19 is a flowchart that shows an example of the flow of a process (a specific procedure of step S33, step S40, step S41, and step S42) executed by the server apparatus 1 at the time of issuing an account of a company that desires to anonymously join the platform. The flow of the process shown in FIG. 19 is executed upon accepting an application for approval to join the platform.

In the example shown in FIG. 19, as in the case of the example illustrated with reference to FIG. 17, it is assumed that a company that desires to anonymously join the platform is the upstream company and a company that mediates an application for approval for the upstream company to join the platform is the downstream company. The company terminal of the downstream company is referred to as company terminal 2A, and the company terminal of the upstream company is referred to as company terminal 2B. The secret key and public key of the upstream company are referred to as secret key A and public key B, and the secret key and public key of the certificate authority 3 are referred to as secret key B and public key B. Furthermore, the electronic signature of the certificate authority 3 is referred to as electronic signature A, and the electronic signature of the upstream company is referred to as electronic signature B.

An entity to execute the flow of the process shown in FIG. 19 is the processor of the server apparatus 1; however, the description will be made on the assumption that the software module of the server apparatus 1 is an entity to execute the flow of the process.

In the flow of the process illustrated in FIG. 19, when the server apparatus 1 receives an application for approval to join the platform, sent from the company terminal 2A of the downstream company, the management unit 115 accepts the application for approval to join the platform (step S101). When the management unit 115 finishes execution of the process of step S101, the management unit 115 executes the process of step S102.

In step S102, the management unit 115 generates predetermined information. In an example, the management unit 115 generates predetermined information by using dealing data between the downstream company and the upstream company. In this case, the management unit 115 identifies dealing data between the downstream company and the upstream company by accessing dealing data stored in the dedicated storage area of the downstream company. The management unit 115 sends a list of the dealing data identified to the company terminal 2A. For example, the management unit 115 sends a user interface as described with reference to FIG. 18 to the company terminal 2A. When information designating multiple pieces of dealing data (information identifying multiple pieces of dealing data) from among the list is sent from the company terminal 2A to the server apparatus 1 in response to this, the management unit 115 selects one or more dealing data from among the multiple pieces of dealing data designated. The management unit 115 generates predetermined information by using the one or more pieces of dealing data selected. In an example, the management unit 115 generates predetermined information by adding a predetermined value to the one or more pieces of dealing data and hashing or encrypting dealing data to which the predetermined value is added. When the management unit 115 finishes execution of the process of step S102, the management unit 115 executes the process of step S103.

In step S103, the management unit 115 sends invitation data to the company terminal 2A. The invitation data includes an address and a request to submit an electronic certificate issued by the certificate authority 3. The invitation data may further include the predetermined information generated in step S102. In this case, the invitation data may further include a request to generate electronic signature B of the upstream company by using the predetermined information. The address included in the invitation data may be a URL of a web site for uploading various pieces of data of an electronic certificate or the like to the server apparatus 1. Such an address may be a one-time URL as described above. When the management unit 115 finishes execution of the process of step S103, the management unit 115 executes the process of step S104.

In step S104, the management unit 115 determines whether there occurs access to the address included in the invitation data. When there is no access to the address included in the invitation data (negative determination in step S104), the management unit 115 waits until there occurs access to the address. On the other hand, when there occurs access to the address (affirmative determination in step S104), the management unit 115 executes the process of step S105.

In step S105, the management unit 115 acquires an electronic certificate, electronic signature B, and predetermined information by performing interaction with the company terminal 2B through execution of the web server. In an example, the management unit 115 may cause the browser of the company terminal 2B to display a user interface for uploading an electronic certificate, electronic signature B, and predetermined information. When the management unit 115 finishes execution of the process of step S105, the management unit 115 executes the process of step S106.

In step S106, the management unit 115 acquires public key B of the certificate authority 3. In an example, public key B of the certificate authority 3 may be input via the operator of the server apparatus 1. When the management unit 115 finishes execution of the process of step S106, the management unit 115 executes the process of step S107.

In step S107, the management unit 115 verifies the validity of the electronic certificate acquired in step S105. In verification of the electronic certificate, initially, the management unit 115 decodes electronic signature A included in the electronic certificate by using public key B of the certificate authority 3. The management unit 115 calculates a hash value of plain text of the owner identification information and public key A of the upstream company, included in the electronic certificate. The management unit 115 compares the information obtained by decoding electronic signature A with the hash value calculated. Furthermore, the management unit 115 determines, by consulting the repository of the certificate authority 3, whether the electronic certificate expires. In an example, information as to whether the electronic certificate expires may be input via the operator of the server apparatus 1. When the management unit 115 finishes execution of the process of step S107, the management unit 115 executes the process of step S108.

In step S108, the management unit 115 determines whether verification of the validity of the electronic certificate in step S107 is successful. At this time, when comparison between information obtained by decoding electronic signature A and a hash value calculated is successful and the electronic certificate has not expired, the management unit 115 determines that verification of the validity of the electronic certificate is successful (affirmative determination in step S108). When the determination is affirmative in step S108, the management unit 115 executes the process of step S109.

In step S109, the management unit 115 verifies the validity of electronic signature B of the upstream company. In verification of electronic signature B, initially, the management unit 115 decodes electronic signature B of the upstream company by using public key A included in the electronic certificate. Subsequently, the management unit 115 compares the information obtained by decoding electronic signature B with the predetermined information. When the management unit 115 finishes execution of the process of step S109, the management unit 115 executes the process of step S110.

In step S110, the management unit 115 determines whether verification of the validity of electronic signature B in step S109 is successful. At this time, when comparison between the information obtained by decoding electronic signature B and the predetermined information is successful, the management unit 115 determines that verification of electronic signature B is successful (affirmative determination in step S110). When the determination is affirmative in step S110, the management unit 115 executes the process of step S111.

In step S111, the management unit 115 issues an account for the upstream company. The account is information used for authentication at the time when the upstream company logs onto the server apparatus 1. In an example, the account includes information for identifying the upstream company and a password. When the management unit 115 finishes execution of the process of step S111, the flow of the process of FIG. 19 ends.

When the determination is negative in step S108 (when verification of the validity of the electronic certificate fails) or when the determination is negative in step S110 (when verification of the validity of electronic signature B of the upstream company fails), the flow of the process of FIG. 19 ends without issuing an account for the upstream company. In this case, the management unit 115 may send, to the company terminal 2B of the upstream company, a user interface indicating that verification of the validity of the electronic certificate fails or verification of the validity of electronic signature B of the upstream company fails.

As described above, in the present embodiment, when the server apparatus 1 accepts an application for approval for joining of a company that desires to anonymously join the platform, the server apparatus 1 verifies the validity of the electronic certificate and electronic signature submitted from a source accessing the address included in the invitation data and approves joining of the company in the platform on condition that verification of them is successful. When verification of the validity of the electronic certificate submitted is successful, it may be regarded that identity verification of the company by the certificate authority 3 is valid. When verification of the validity of the electronic signature submitted is successful, it is proved that the electronic signature submitted is generated by using the secret key (the secret key corresponding to the public key included in the electronic certificate) of the company and the predetermined information included in the invitation data. Thus, it is regarded that a source accessing the address included in the invitation data holds the secret key of the company and a recipient of the invitation data matches the source accessing the address. Thus, when verification of the validity of the electronic certificate and verification of the validity of the electronic signature of the company are successful, it may be found that the source accessing the address included in the invitation data matches the company of which identity verification has been performed by the certificate authority 3.

Therefore, according to the present embodiment, it is possible to ensure the authenticity of a company that anonymously joins a platform.

With the configuration in which predetermined information is generated by using dealing data on dealing between a company that desires to anonymously join a platform and a company that has submitted an application for approval to join the platform, the company that desires to anonymously join the platform can be found as a company that has dealt with a company that has already joined the platform.

With the configuration in which predetermined information is generated by the server apparatus 1 selecting one or more pieces of dealing data from among multiple pieces of dealing data on dealing between a company that desires to anonymously join a platform and a company that has submitted an application for approval to join the platform, it is possible to reduce a situation in which dealing data used to generate predetermined information is identified by a third party.

With the configuration in which predetermined information is generated by adding a predetermined value to one or more pieces of dealing data selected by the server apparatus 1 and hashing or encrypting dealing data to which the predetermined value is added, it is possible to further reliably reduce a situation in which dealing data used to generate predetermined information is identified by a third party.

### Other Embodiments

The above-described embodiments are only illustrative, and the disclosure can be implemented with modifications as needed without departing from the purport of the disclosure. For example, the processes and devices described in this disclosure may be freely implemented in combination without any technical contradiction.

In the description of the embodiments, the upstream company and the downstream company that are adjacent in the supply chain are illustrated as the first company and the second company according to the aspect of the disclosure; however, the configuration is not limited thereto. For example, between companies that have business connections among a plurality of companies that belong to the supply chain, the first company and the second company do not need to be adjacent to each other in the supply chain.

In the description of the embodiments, the server apparatus 1 stores product information and dealing data in a database. Alternatively, product information and dealing data may be stored by a device other than a database.

In the description of the embodiments, a mode in which a product tree is completed when the server apparatus 1 executes the first to fourth phases has been illustrated as a platform to which the aspect of the disclosure is applied; however, the configuration is not limited thereto. For example, the aspect of the disclosure is also applicable to a platform in which a role of the server apparatus 1 is disposed so as to be distributed among the company terminals 2. The aspect of the disclosure is also applicable to, for example, a platform in which product information is stored in a distributed database using a blockchain platform. In another example, the aspect of the disclosure may be applied to a platform in which a center server holds meta data of product information (for example, information for identifying products) and product information of each company is held in a terminal of each company.

The configuration of an electronic certificate and an electronic signature of the second company does not need to be limited to the configuration of the above-described embodiments and may be modified as needed. The configuration of an electronic certificate is not limited as long as the authenticity of the public key of the second company can be verified and may be determined as needed according to the embodiments. The configuration of an electronic signature of the second company is not limited as long as the electronic signature can be decoded with the public key of the second company and verification of the validity is possible; however, the configuration may be determined as needed according to the embodiments.

In the description of the embodiments, the platform is provided by the server apparatus 1; however, the configuration is not limited thereto. For example, the server apparatus 1 may be a server independent of the platform and provide the platform with information obtained from the company terminals 2.

In the above-described embodiments, access control of each company is implemented by providing a dedicated storage area and a shared storage area. However, a method of implementing access control is not limited to such an example. A selected method may be used for access control.

In the above-described embodiments, a plurality of companies included in a supply chain has been described as companies that produce products. However, companies included in a supply chain do not necessarily need to be companies that produce products. For example, companies that perform transport, import, storage, wholesale, and the like of products may be included in companies that make up a supply chain. In an example, some companies of a plurality of companies may be, for example, companies that do not execute a manufacturing process, such as a trading company, a distributing agent, and an import agent, or may receive products from a company at a level upstream by one (upstream company) and supply products to a company at a level downstream by one (downstream company).

In the above-described embodiments, a supply chain of products relevant to automobiles have been assumed, an OEM maker has been described as the most downstream company, and a company that supplies parts, materials, assemblies, and the like has been described as a supplier. However, companies that belong to a supply chain are not necessarily limited to these. Companies in each phase may be determined as needed according to products and the like. Manufacturing activities performed in each company by the time an end product is obtained may be determined as needed according to an embodiment and may, for example, include all the activities that can be performed by the time an end product is obtained, such as excavation, working, assembling, conveyance, and storage. A product is not limited to the one relevant to an automobile and may be selected as needed according to embodiments. In an example, the product may be a battery used other than an automobile.

In the above-described embodiments, the server apparatus 1 is configured to execute information processing of the first to fourth phases. However, the configuration of the server apparatus 1 does not need to be limited to such an example. In an example, in the server apparatus 1, information processing in at least one or some of the first to fourth phases may be omitted. The server apparatus 1 may be configured to execute other selected information processing.

In the above-described embodiments, traceability-related information of each company (TierN-1) itself except the most upstream company does not need to be stored in a shared storage area with its own downstream company, and an integrated result of each company may be stored in a shared storage area between the company and a downstream company (TierN-2) of the company. Thus, traceability-related information (integrated result) at an end product can be obtained without disclosing its own company's traceability-related information.

In the above-described embodiments, it is assumed that each company places an order with one company for a material. However, in the above-described embodiments, an order form of each company does not need to be limited to such an example. At least some of companies that belong to a supply chain may place an order with a plurality of upstream companies for the same product and selectively use the obtained upstream products for its own company's product. For example, in the example of FIG. 3, a product A11_1, a product A11_2, or a product A11_3 of Tier2 may be selectively used for the product A1 of Tier1. In this case, the server apparatus 1 may hold an association relationship for each pattern used. In the above example, the server apparatus 1 may hold association information for the product A1 of Tier1 like pattern 1 "product A11_1, ..., of Tier2", pattern 2 "product A11_2, ...", and pattern 3 "product A11_3, ...".

A process described as the one that is performed by a device may be shared and performed by multiple devices. Alternatively, processes described as the ones that are respectively performed by different devices may be performed by a device. In a computer system, what hardware configuration (server configuration) implements functions may be flexibly changed.

The disclosure may also be implemented as follows. A computer is supplied with a computer program having the functions described in the above-described embodiment, and one or more processors of the computer read out and run the program. Such a computer program may be provided to a computer with a non-transitory computer-readable storage medium connectable to a system bus of the computer or may be provided to a computer via a network. Examples of the non-transitory computer-readable storage medium include a disk or disc of any type, such as a magnetic disk (floppy (registered trademark) disk, a hard disk drive (HDD), or the like), an optical disc (CD-ROM, DVD disc, a Blue-ray disc, or the like), a read only memory (ROM), a random access memory (RAM), an EPROM, an EEPROM, a magnetic card, a flash memory, an optical card, and a medium of any type suitable for storing electronic instructions.

## Claims

1. An information processing apparatus (1) comprising a control unit (50), wherein the control unit (11) is configured to execute:
accepting an application for approval for a second company to join a platform from an account of a first company that has joined the platform, wherein the platform is configured to provide information on products supplied by a supply chain including a plurality of companies, the first company and the second company belonging to the supply chain, and joining the platform includes being able to log onto the platform;
sending invitation data to the second company in response to the application, the invitation data including an address and a request to submit an electronic certificate issued by a certificate authority (3);
accepting access from a terminal (2; 2B) of the second company to the address included in the invitation data;
acquiring the electronic certificate and an electronic signature of the second company from the terminal (2; 2B) of the second company in response to the access;
verifying validity of the electronic certificate acquired, by using a public key of the certificate authority (3);
verifying validity of the electronic signature acquired, by using a public key of the second company, the public key being included in the electronic certificate; and
approving joining of the second company in the platform in response to successful verification of the validity of the electronic certificate and successful verification of the validity of the electronic signature,
wherein the electronic signature of the second company is generated by encrypting predetermined information with a secret key corresponding to the public key of the second company,
wherein the invitation data sent by the control unit (11) is configured to further include the predetermined information, and
wherein the predetermined information is generated based on dealing data on dealing between the first company and the second company.

2. The information processing apparatus (1) according to claim 1, wherein the control unit (11) is configured to, in response to acceptance of the application, further execute:
selecting one or more pieces of dealing data from among multiple pieces of dealing data on dealing between the first company and the second company; and
generating the predetermined information from the one or more pieces of dealing data selected.

3. The information processing apparatus (1) according to claim 2, wherein:
the multiple pieces of dealing data on dealing between the first company and the second company are held in the platform; and
the selecting the one or more pieces of dealing data includes
accepting designation of the multiple pieces of dealing data from the account of the first company, and
selecting the one or more pieces of dealing data from among the multiple pieces of dealing data designated.

4. The information processing apparatus (1) according to claim 1, wherein the predetermined information is generated by adding a predetermined value to the dealing data and hashing or encrypting the dealing data to which the predetermined value is added.

5. An information processing method comprising:
accepting, by a computer, an application for approval for a second company to join a platform from an account of a first company that has joined the platform, wherein the platform is configured to provide information on products supplied by a supply chain including a plurality of companies, the first company and the second company belonging to the supply chain, and joining the platform includes being able to log onto the platform;
sending, by the computer, invitation data to the second company in response to the application, the invitation data including an address and a request to submit an electronic certificate issued by a certificate authority (3);
accepting, by the computer, access from a terminal (2; 2B) of the second company to the address included in the invitation data;
acquiring, by the computer, the electronic certificate and an electronic signature of the second company from the terminal (2; 2B) of the second company in response to the access;
verifying, by the computer, validity of the electronic certificate acquired, by using a public key of the certificate authority (3);
verifying, by the computer, validity of the electronic signature acquired, by using a public key of the second company, the public key being included in the electronic certificate; and
approving, by the computer, joining of the second company in the platform in response to successful verification of the validity of the electronic certificate and successful verification of the validity of the electronic signature,
wherein the electronic signature of the second company is generated by encrypting predetermined information with a secret key corresponding to the public key of the second company,
wherein the invitation data sent by the computer is configured to further include the predetermined information, and
wherein the predetermined information is generated based on dealing data on dealing between the first company and the second company.

6. The information processing method according to claim 5, further comprising:
by the computer, in response to acceptance of the application,
selecting one or more pieces of dealing data from among multiple pieces of dealing data on dealing between the first company and the second company; and
generating the predetermined information from the one or more pieces of dealing data selected.

7. The information processing method according to claim 6, wherein:
the multiple pieces of dealing data on dealing between the first company and the second company are held in the platform; and
the selecting the one or more pieces of dealing data includes
accepting designation of the multiple pieces of dealing data from the account of the first company, and
selecting the one or more pieces of dealing data from among the multiple pieces of dealing data designated.

8. The information processing method according to claim 5, wherein the predetermined information is generated by adding a predetermined value to the dealing data and hashing or encrypting the dealing data to which the predetermined value is added.

9. A computer program comprising instructions which, when the program is executed by a computer, causes the computer to execute the information processing method of any of claims 5 to 8.

10. A non-transitory storage medium having stored thereon the computer program of claim 9.

## Patentansprüche

1. Informationsverarbeitungsvorrichtung (1), umfassend eine Steuereinheit (50), wobei die Steuereinheit (11) dazu ausgestaltet ist auszuführen:
Annehmen eines Antrags auf Genehmigung, dass ein zweites Unternehmen einer Plattform beitreten darf, von einem Konto eines ersten Unternehmens, das der Plattform bereits beigetreten ist, wobei die Plattform dazu ausgestaltet ist, Informationen über Produkte bereitzustellen, die durch eine Lieferkette, die mehrere Unternehmen beinhaltet, geliefert werden, wobei das erste Unternehmen und das zweite Unternehmen zu der Lieferkette gehören, und der Beitritt zu der Plattform die Fähigkeit enthält, sich bei der Plattform einzuloggen,
Senden von Einladungsdaten an das zweite Unternehmen in Reaktion auf den Antrag, wobei die Einladungsdaten eine Adresse und eine Aufforderung zum Einreichen eines durch eine Zertifizierungsstelle (3) ausgestellten elektronischen Zertifikats beinhalten,
Akzeptieren des Zugriffs von einem Terminal (2; 2B) des zweiten Unternehmens auf die in den Einladungsdaten enthaltene Adresse,
Erfassen des elektronischen Zertifikats und einer elektronischen Signatur des zweiten Unternehmens von dem Terminal (2; 2B) des zweiten Unternehmens in Reaktion auf den Zugriff,
Verifizieren der Gültigkeit des erfassten elektronischen Zertifikats unter Verwendung eines öffentlichen Schlüssels der Zertifizierungsstelle (3),
Verifizieren der Gültigkeit der erfassten elektronischen Signatur unter Verwendung eines öffentlichen Schlüssels des zweiten Unternehmens, wobei der öffentliche Schlüssel in dem elektronischen Zertifikat enthalten ist, und
Genehmigen des Beitritts des zweiten Unternehmens zu der Plattform in Reaktion auf die erfolgreiche Verifizierung der Gültigkeit des elektronischen Zertifikats und die erfolgreiche Verifizierung der Gültigkeit der elektronischen Signatur,
wobei die elektronische Signatur des zweiten Unternehmens durch Verschlüsseln zuvor festgelegter Informationen mit einem geheimen Schlüssel generiert wird, der dem öffentlichen Schlüssel des zweiten Unternehmens entspricht,
wobei die durch die Steuereinheit (11) gesendeten Einladungsdaten dazu ausgestaltet sind, außerdem die zuvor festgelegten Informationen zu enthalten, und
wobei die zuvor festgelegten Informationen auf der Grundlage von Geschäftstransaktionsdaten bezüglich Geschäftstransaktionen zwischen dem ersten Unternehmen und dem zweiten Unternehmen generiert werden.

2. Informationsverarbeitungsvorrichtung (1) nach Anspruch 1, wobei die Steuereinheit (11) dazu ausgestaltet ist, in Reaktion auf die Annahme des Antrags ferner auszuführen:
Auswählen einer oder mehrerer Geschäftstransaktionsdaten aus mehreren Geschäftstransaktionsdaten bezüglich der Geschäftstransaktion zwischen dem ersten Unternehmen und dem zweiten Unternehmen, und
Generieren der zuvor festgelegten Informationen aus den ausgewählten einen oder mehreren Geschäftstransaktionsdaten.

3. Informationsverarbeitungsvorrichtung (1) nach Anspruch 2, wobei:
die mehreren Geschäftstransaktionsdaten bezüglich Geschäftstransaktionen zwischen dem ersten Unternehmen und dem zweiten Unternehmen in der Plattform gespeichert sind, und
das Auswählen der einen oder der mehreren Geschäftstransaktionsdaten enthält:
Akzeptieren der Bezeichnung der mehreren Geschäftstransaktionsdaten von dem Konto des ersten Unternehmens aus, und
Auswählen der einen oder der mehreren Geschäftstransaktionsdaten aus den mehreren bezeichneten Geschäftstransaktionsdaten.

4. Informationsverarbeitungsvorrichtung (1) nach Anspruch 1, wobei die zuvor festgelegten Informationen durch Hinzufügen eines zuvor festgelegten Wertes zu den Geschäftstransaktionsdaten und durch Verwürfeln oder Verschlüsseln der Geschäftstransaktionsdaten, denen der zuvor festgelegte Wert hinzugefügt wurde, generiert werden.

5. Informationsverarbeitungsverfahren, umfassend:
Annehmen, durch einen Computer, eines Antrags auf Genehmigung, dass ein zweites Unternehmen einer Plattform beitreten darf, von einem Konto eines ersten Unternehmens, das der Plattform bereits beigetreten ist, wobei die Plattform dazu ausgestaltet ist, Informationen über Produkte bereitzustellen, die durch eine Lieferkette, die mehrere Unternehmen beinhaltet, geliefert werden, wobei das erste Unternehmen und das zweite Unternehmen zu der Lieferkette gehören, und der Beitritt zu der Plattform die Fähigkeit enthält, sich bei der Plattform einzuloggen,
Senden, durch den Computer, von Einladungsdaten an das zweite Unternehmen in Reaktion auf den Antrag, wobei die Einladungsdaten eine Adresse und eine Aufforderung zum Einreichen eines durch eine Zertifizierungsstelle (3) ausgestellten elektronischen Zertifikats beinhalten,
Akzeptieren, durch den Computer, des Zugriffs von einem Terminal (2; 2B) des zweiten Unternehmens auf die in den Einladungsdaten enthaltene Adresse,
Erfassen, durch den Computer, des elektronischen Zertifikats und einer elektronischen Signatur des zweiten Unternehmens von dem Terminal (2; 2B) des zweiten Unternehmens in Reaktion auf den Zugriff,
Verifizieren, durch den Computer, der Gültigkeit des erfassten elektronischen Zertifikats unter Verwendung eines öffentlichen Schlüssels der Zertifizierungsstelle (3),
Verifizieren, durch den Computer, der Gültigkeit der erfassten elektronischen Signatur unter Verwendung eines öffentlichen Schlüssels des zweiten Unternehmens, wobei der öffentliche Schlüssel in dem elektronischen Zertifikat enthalten ist, und
Genehmigen, durch den Computer, des Beitritts des zweiten Unternehmens zu der Plattform in Reaktion auf die erfolgreiche Verifizierung der Gültigkeit des elektronischen Zertifikats und die erfolgreiche Verifizierung der Gültigkeit der elektronischen Signatur,
wobei die elektronische Signatur des zweiten Unternehmens durch Verschlüsseln zuvor festgelegter Informationen mit einem geheimen Schlüssel generiert wird, der dem öffentlichen Schlüssel des zweiten Unternehmens entspricht,
wobei die durch den Computers gesendeten Einladungsdaten dazu ausgestaltet sind, außerdem die zuvor festgelegten Informationen zu enthalten, und
wobei die zuvor festgelegten Informationen auf der Grundlage von Geschäftstransaktionsdaten bezüglich Geschäftstransaktionen zwischen dem ersten Unternehmen und dem zweiten Unternehmen generiert werden.

6. Informationsverarbeitungsverfahren nach Anspruch 5, ferner umfassend:
durch den Computer, in Reaktion auf die Annahme des Antrags,
Auswählen einer oder mehrerer Geschäftstransaktionsdaten aus mehreren Geschäftstransaktionsdaten bezüglich der Geschäftstransaktion zwischen dem ersten Unternehmen und dem zweiten Unternehmen, und
Generieren der zuvor festgelegten Informationen aus den ausgewählten einen oder mehreren Geschäftstransaktionsdaten.

7. Informationsverarbeitungsverfahren nach Anspruch 6, wobei
die mehreren Geschäftstransaktionsdaten bezüglich Geschäftstransaktionen zwischen dem ersten Unternehmen und dem zweiten Unternehmen in der Plattform gespeichert sind, und
das Auswählen der einen oder der mehreren Geschäftstransaktionsdaten das Akzeptieren der Bezeichnung der mehreren Geschäftstransaktionsdaten von dem Konto des ersten Unternehmens aus enthält, und
Auswählen der einen oder der mehreren Geschäftstransaktionsdaten aus den mehreren bezeichneten Geschäftstransaktionsdaten.

8. Informationsverarbeitungsverfahren nach Anspruch 5, wobei die zuvor festgelegten Informationen durch Hinzufügen eines zuvor festgelegten Wertes zu den Geschäftstransaktionsdaten und durch Verwürfeln oder Verschlüsseln der Geschäftstransaktionsdaten, denen der zuvor festgelegte Wert hinzugefügt wurde, generiert werden.

9. Computerprogramm, das Instruktionen umfasst, die, wenn das Programm durch einen Computer ausgeführt wird, den Computer veranlassen, das Informationsverarbeitungsverfahren nach einem der Ansprüche 5 bis 8 auszuführen.

10. Nicht- transitorisches Speichermedium, auf dem das Computerprogramm nach Anspruch 9 gespeichert ist.

## Revendications

1. Appareil de traitement de l'information (1) comprenant une unité de commande (50), l'unité de commande (11) étant configurée pour exécuter :
l'acceptation d'une demande d'approbation qu'une deuxième société rejoigne une plate-forme à partir d'un compte d'une première société qui a rejoint la plate-forme, la plate-forme étant configurée pour délivrer de l'information sur des produits fournis par une chaîne d'approvisionnement comprenant une pluralité de sociétés, la première société et la deuxième société appartenant à la chaîne d'approvisionnement, et rejoindre la plate-forme comprend la capacité à se connecter à la plate-forme ;
l'envoi de données d'invitation à la deuxième société en réponse à la demande, les données d'invitation comprenant une adresse et une demande pour soumettre un certificat électronique délivré par une autorité de certification (3) ;
l'acceptation de l'accès à partir d'un terminal (2 ; 2B) de la deuxième société à l'adresse incluse dans les données d'invitation ;
l'acquisition du certificat électronique et d'une signature électronique de la deuxième société à partir du terminal (2 ; 2B) de la deuxième société en réponse à l'accès ;
la vérification de la validité du certificat électronique acquis, en utilisant une clé publique de l'autorité de certification (3) ;
la vérification de la validité de la signature électronique acquise, en utilisant une clé publique de la deuxième société, la clé publique étant incluse dans le certificat électronique ; et
l'approbation de la deuxième société rejoignant la plate-forme en réponse à la vérification réussie de la validité du certificat électronique et à la vérification réussie de la validité de la signature électronique,
la signature électronique de la deuxième société étant générée en chiffrant de l'information prédéterminée avec une clé secrète correspondant à la clé publique de la deuxième société,
les données d'invitation envoyées par l'unité de commande (11) étant configurées pour inclure en outre l'information prédéterminée, et
l'information prédéterminée étant générée sur la base de données de transaction sur une transaction entre la première société et la deuxième société.

2. Appareil de traitement de l'information (1) selon la revendication 1, dans lequel l'unité de commande (11) est configurée pour, en réponse à l'acceptation de la demande, exécuter en outre :
la sélection d'un ou plusieurs éléments des données de transaction parmi de multiples éléments des données de transaction sur la transaction entre la première société et la deuxième société ; et
la génération de l'information prédéterminée à partir des un ou plusieurs éléments des données de transaction sélectionnées.

3. Appareil de traitement de l'information (1) selon la revendication 2, dans lequel :
les multiples éléments des données de transaction sur la transaction entre la première société et la deuxième société sont détenus dans la plate-forme ; et
la sélection des un ou plusieurs éléments des données de transaction comprend
l'acceptation de la désignation des multiples éléments des données de transaction à partir du compte de la première société, et
la sélection des un ou plusieurs éléments des données de transaction parmi les multiples éléments des données de transaction désignées.

4. Appareil de traitement de l'information (1) selon la revendication 1, dans lequel l'information prédéterminée est générée en ajoutant une valeur prédéterminée aux données de transaction et en découpant ou en chiffrant les données de transaction auxquelles la valeur prédéterminée est ajoutée.

5. Procédé de traitement de l'information comprenant :
l'acceptation, par un ordinateur, d'une demande d'approbation qu'une deuxième société rejoigne une plate-forme à partir d'un compte d'une première société qui a rejoint la plate-forme, la plate-forme étant configurée pour délivrer de l'information sur des produits fournis par une chaîne d'approvisionnement comprenant une pluralité de sociétés, la première société et la deuxième société appartenant à la chaîne d'approvisionnement, et le fait de rejoindre la plate-forme comprend la capacité à se connecter à la plate-forme ;
l'envoi, par l'ordinateur, de données d'invitation à la deuxième société en réponse à la demande, les données d'invitation comprenant une adresse et une demande de soumettre un certificat électronique délivré par une autorité de certification (3) ;
l'acceptation, par l'ordinateur, d'un accès à partir d'un terminal (2 ; 2B) de la deuxième société à l'adresse incluse dans les données d'invitation ;
l'acquisition, par l'ordinateur, du certificat électronique et d'une signature électronique de la deuxième société à partir du terminal (2 ; 2B) de la deuxième société en réponse à l'accès ;
la vérification, par l'ordinateur, de la validité du certificat électronique acquis, en utilisant une clé publique de l'autorité de certification (3) ;
la vérification, par l'ordinateur, de la validité de la signature électronique acquise, en utilisant une clé publique de la deuxième société, la clé publique étant incluse dans le certificat électronique ; et
l'approbation, par l'ordinateur, pour la deuxième société de rejoindre la plate-forme en réponse à la vérification réussie de la validité du certificat électronique et à la vérification réussie de la validité de la signature électronique,
la signature électronique de la deuxième société étant générée en chiffrant de l'information prédéterminée avec une clé secrète correspondant à la clé publique de la deuxième société,
les données d'invitation envoyées par l'ordinateur étant configurées pour inclure en outre l'information prédéterminée, et
l'information prédéterminée étant générée sur la base de données de transaction sur une transaction entre la première société et la deuxième société.

6. Procédé de traitement de l'information selon la revendication 5, comprenant en outre :
par l'ordinateur, en réponse à l'acceptation de la demande,
la sélection d'un ou plusieurs éléments des données de transaction parmi de multiples éléments des données de transaction sur la transaction entre la première société et la deuxième société ; et
la génération de l'information prédéterminée à partir des un ou plusieurs éléments des données de transaction sélectionnées.

7. Procédé de traitement de l'information selon la revendication 6, selon lequel :
les multiples éléments des données de transaction sur la transaction entre la première société et la deuxième société sont détenus dans la plate-forme ; et
la sélection des un ou plusieurs éléments des données de transaction comprend
l'acceptation de la désignation des multiples éléments des données de transaction provenant du compte de la première société, et
la sélection des un ou plusieurs éléments des données de transaction parmi les multiples éléments des données de transaction désignées.

8. Procédé de traitement de l'information selon la revendication 5, selon lequel l'information prédéterminée est générée en ajoutant une valeur prédéterminée aux données de transaction et en découpant ou en chiffrant les données de transaction auxquelles la valeur prédéterminée est ajoutée.

9. Programme informatique comprenant des instructions qui, quand le programme est exécuté par un ordinateur, amènent l'ordinateur à exécuter le procédé de traitement de l'information selon l'une quelconque des revendications 5 à 8.

10. Support de stockage non-transitoire ayant stocké dessus le programme informatique selon la revendication 9.
